# EUROPEAN PATENT SPECIFICATION

(11) **EP 4 492 548 B1**
(45) Date of publication and mention of the grant of the patent: **29.07.2026**
(21) Application number: 22931475.2
(22) Date of filing: 18.03.2022
(51) Int. Cl.: H01M 50/627, H01M 50/682, H01M 50/103, H01M 10/04, H01M 50/204, H01M 50/578, H01M 50/249, H01M 50/15, H01M 50/593, H01M 50/258, H01M 50/609, H01M 10/058, H01M 10/0525

(54) **BATTERY CELL, BATTERY, ELECTRICAL DEVICE, AND METHOD AND DEVICE FOR MANUFACTURING BATTERY CELL**
BATTERIEZELLE, BATTERIE, ELEKTRISCHE VORRICHTUNG SOWIE VERFAHREN UND VORRICHTUNG ZUR HERSTELLUNG DER BATTERIEZELLE
ÉLÉMENT DE BATTERIE, BATTERIE, DISPOSITIF ÉLECTRIQUE ET PROCÉDÉ ET DISPOSITIF DE FABRICATION D'ÉLÉMENT DE BATTERIE

(43) Date of publication of application: 15.01.2025
(73) Proprietor: Contemporary Amperex Technology Co., Limited, Ningde, Fujian 352100 (CN)
(72) Inventor: CHEN, Long, Ningde, Fujian 352100 (CN); LIN, Denghua, Ningde, Fujian 352100 (CN); HUANG, Shoujun, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2022/081843
(87) International publication number: WO 2023/173444

(56) References cited:
- EP-A1- 4 050 709
- CN-A- 110 518 156
- CN-A- 112 259 858
- CN-A- 112 838 325
- CN-A- 112 838 325
- JP-A- 2011 238 486

## Description

### TECHNICAL FIELD

The present application relates to the field of battery technologies, in particular to a battery cell as specified in any of claims 1-12, a battery as specified in claim 13, and an electrical device as specified in claim 14.

### BACKGROUND

Energy saving and emission reduction is the key to the sustainable development of automobile industry. In this case, electric vehicles have become an important part of the sustainable development of automobile industry because of their advantages of energy saving and environmental protection. For the electric vehicle, a battery technique is again another vital factor for its development. CN112838325A relates to a battery. CN112259858A mentions that a lithium ion battery comprises a case and a plurality of winding core groups.

With the rapid development of battery technology, how to improve the processing and production efficiency of battery is an urgent technical problem to be solved in battery technology.

### SUMMARY

The embodiments of the present application provide a battery cell, a battery, an electrical device, a method and device for manufacturing the battery cell, which can improve the infiltration effect and infiltration efficiency of the battery cell.

In the first aspect, a battery cell is provided, which includes: a housing provided with a receiving cavity, the housing having a first wall, and the first wall being provided with a liquid injection hole; a first electrode assembly and a second electrode assembly arranged in a first direction, the first electrode assembly and the second electrode assembly being received in the receiving cavity; and an insulating structure, the insulating structure being disposed between the first electrode assembly and the second electrode assembly, the insulating structure including a second wall and third wall, wherein the second wall is opposite to a first end face of the first electrode assembly, the third wall is opposite to a second end face of the second electrode assembly, the second wall is provided with a first through hole, the third wall is provided with a second through hole, a first surface of the insulating structure facing the first wall is provided a third through hole, and the third through hole is configured to introduce electrolyte injected through the liquid injection hole into an interior of the insulating structure so that the electrolyte in the interior of the insulating structure flows to the first electrode assembly through the first through hole and to the second electrode assembly through the second through hole; wherein the first wall is provided with a pressure relief mechanism, the pressure relief mechanism is configured to actuate to relieve pressure inside the battery cell when the pressure or temperature inside the battery cell reaches a threshold value. The battery cell further includes a flow guide arranged between the end faces of the first electrode assembly and the second electrode assembly facing the first wall and the first wall, wherein the flow guide is provided with a liquid accumulation tank, an opening of the liquid accumulation tank faces the first wall, a bottom wall of the liquid accumulation tank is provided with a fifth through hole, the fifth through hole corresponds to the third through hole, the liquid accumulation tank is configured to collect the electrolyte injected through the liquid injection hole, and the electrolyte in the liquid accumulation tank passes through the fifth through hole and the third through hole in turn to flow into the interior of the insulating structure.

Therefore, in the battery cell according to the embodiments of the present application, since a hollow insulating structure is provided between the first electrode assembly and the second electrode assembly, and a third through hole is provided on the first surface of the insulating structure facing the first wall, electrolyte injected through the liquid injection hole can flow into an interior of the hollow insulating structure through the third through hole. Thus, the electrolyte in the interior of the insulating structure can flow to the first electrode assembly through the first through hole on the second wall corresponding to the first end face, and this part of the electrolyte infiltrates the first electrode assembly through the first end face. In addition, the electrolyte in the insulating structure can further flow to the second electrode assembly through the second through hole on the third wall corresponding to the second end face, and this part of the electrolyte infiltrates the second electrode assembly through the second end face, thereby achieving the effect of uniformly and rapidly infiltrating the two electrode assemblies, improving the infiltrating efficiency and infiltrating effect of the battery cell, and also improving the machining efficiency and electrochemical performance of the battery cell.

In some embodiments, the insulating structure further includes a second surface, the second surface is located away from the first wall and opposite the first surface, the second surface is provided with a fourth through hole, the fourth through hole is configured to allow the electrolyte in the interior of the insulating structure to flow to the first electrode assembly and the second electrode assembly through the fourth through hole, so as to further accelerate the outflow rate of the electrolyte within the insulating structure, i.e., to accelerate the infiltration rate of the electrolyte into the first electrode assembly and the second electrode assembly.

In some embodiments, the second wall is provided with a plurality of the first through holes, and/or the third wall is provided with a plurality of the second through holes.

A plurality of first through holes are arranged at different positions on the second wall, and a plurality of second through holes are arranged at different positions on the third wall, so that the electrolyte in the insulating structure flows to the first electrode assembly respectively through the different first through holes at different positions, and the electrolyte in the insulating structure flows to the second electrode assembly respectively through the different second through holes at different positions, thereby infiltrating the first electrode assembly and the second electrode assembly from a plurality of positions, which can not only accelerate the infiltration speed, but also improve the infiltration effect, and evenly infiltrate the first electrode assembly and the second electrode assembly as far as possible.

In some embodiments, a number of the first through holes provided in the second wall is equal to a number of the second through holes provided in the third wall, and positions of the first through holes provided in the second wall correspond to positions of the second through holes provided in the third wall.

During machining, the first through hole on the second wall and the second through hole on the third wall can be obtained by arranging through holes running through both the second wall and the third wall, so as to improve machining efficiency. In the infiltration, since the first through hole and the second through hole are equal in number and correspond in position, the position on the first electrode assembly to which the electrolyte inside the insulating structure flows is exactly corresponding to that on the second electrode assembly, which makes the infiltration effects on the first electrode assembly and the second electrode assembly are basically consistent, and the infiltration efficiency can be improved.

In some embodiments, the second wall is provided with a plurality of rows of first through holes arranged in a second direction, the first through holes in each of the plurality of rows of first through holes include a plurality of first through holes arranged in a third direction, the first direction, the second direction and the third direction are pairwise perpendicular; and/or, the third wall is provided with a plurality of rows of second through holes arranged in the second direction, the second through holes in each of the plurality of rows of second through holes include a plurality of second through holes arranged in the third direction, the first direction, the second direction and the third direction are pairwise perpendicular. The first through hole is arranged on the second wall based on a set of rules, and the second through hole is arranged on the third wall based on the rules, which can not only improve the machining efficiency, but also improve the uniformity of infiltration.

In some embodiments, the first electrode assembly includes a first electrode plate and a second electrode plate, the first electrode plate and the second electrode plate are provided wound around a winding axis, the winding axis is parallel to the first direction, the first end face is perpendicular to the winding axis. Alternatively, the first electrode assembly includes a plurality of first electrode plates and a plurality of second electrode plates, the plurality of first electrode plates and the plurality of second electrode plates are alternately stacked in the second direction, the second direction is perpendicular to the first direction, the first end face is perpendicular to the first direction. Alternatively, the first electrode assembly includes a first electrode plate and a plurality of second electrode plates, the first electrode plate includes a plurality of stacking sections and a plurality of bending sections, the plurality of bending sections are configured to connect two adjacent stacking sections, the plurality of second electrode plates and the plurality of stacking sections are alternately stacked in the second direction, the second direction is perpendicular to the first direction, and the first end face is perpendicular to the first direction.

In the case where the first end face of the first electrode assembly is arranged in the above manner, as compared with other setting methods, when the electrolyte flows from the insulating structure to the first end face, the electrolyte can quickly infiltrate the various layers of the electrode plate of the first electrode assembly through the first end face, so that the infiltrating effect of the first electrode assembly is more uniform, and the infiltrating efficiency of the first electrode assembly is further improved.

In some embodiments, the battery cell is a cuboid, and the first direction is a length direction of the battery cell. By arranging the two electrode assemblies in the length direction of the battery cell, the size of the battery cell in the length direction can be increased, so that when a plurality of battery cells are assembled into a battery, an internal space of the battery can be fully utilized, that is, the space utilization rate of the battery can be improved, and further the energy density of the battery can be improved.

In the battery cell of the embodiments of the present application, the electrolyte injected into the battery cell from the liquid injection hole is collected by a liquid accumulation tank of a flow guide, and then flows to an insulating structure between electrode assemblies through a fifth through hole in the liquid accumulation tank. In this way, although the liquid injection hole is only located at a specific position on the first wall, the design of the liquid accumulation tank and the fifth through hole can achieve the redistribution of the injection position of the electrolyte. That is, without limiting the position of the liquid injection hole, the electrolyte can flow directionally by reasonably position settings of the liquid accumulation tank and the fifth through hole, and the electrolyte can flow to the third through hole from the fifth through hole, and then enter the insulating structure, so that a better infiltration effect can be achieved for the electrode assembly, which improves the infiltration efficiency, and also improves the machining efficiency and electrochemical performance of the battery cell.

In some embodiments, an orthographic projection of the liquid injection hole facing the flow guide is located on the bottom wall of the liquid accumulation tank. When the electrolyte is injected into the battery cell through the liquid injection hole, the electrolyte flows to the liquid accumulation tank of the flow guide under the action of gravity. In order to ensure that the injected electrolyte can be completely collected the liquid accumulation tank as much as possible, the liquid injection hole can be arranged corresponding to the bottom wall of the liquid accumulation tank to avoid the electrolyte flowing to other directions as much as possible.

In some embodiments, an orthographic projection of the fifth through hole facing the first surface is located within a region of the third through hole.

With the arrangement of the flow guide, the electrolyte flows to an interior of the battery cell through the liquid injection hole, the electrolyte is collected by the liquid accumulation tank, and the flow direction of the electrolyte is adjusted again through the fifth through hole, so that the electrolyte can flow to the third through hole through the fifth through hole under the action of gravity, and then enters the interior of the insulating structure through the third through hole, so as to prevent the electrolyte flowing out of the fifth through hole from splashing to other positions in the battery cell and affecting the infiltration efficiency of the electrolyte when the fifth through hole deviates from the third through hole.

In some embodiments, the bottom wall of the liquid accumulation tank is inclined with respect to a first plane for converging the electrolyte in the interior of the liquid accumulation tank toward the fifth through hole, the first plane is perpendicular to an axis of the liquid injection hole.

The bottom wall of the liquid accumulation tank is arranged to be inclined, so that the electrolyte in the liquid accumulation tank converges towards the fifth through hole, so that on the one hand, the speed of the electrolyte flowing to the electrode assembly can be accelerated, on the other hand, the accumulation of the electrolyte in other positions in the liquid accumulation tank except the fifth through hole can be avoided, and waste caused by residual electrolyte in the liquid accumulation tank can be avoided.

In some embodiments, the bottom wall of the liquid accumulation tank is inclined at an angle greater than 0° and less than 1° with respect to the first plane.

The inclination angle can be set according to the thickness of the flow guide. If the thickness of the flow guide is large, the inclination angle can be set to be large. On the contrary, if the thickness of the guide is small, the inclination angle is set to be small. Considering the limited internal space of the battery cell, in order to improve the energy density of the battery cell, the thickness of the flow guide is usually small, hence the inclination angle is usually set to be less than or equal to 0.25 to save the space occupied by the flow guide.

In some embodiments, the battery cell further includes an insulating member, the insulating member is arranged on outer surfaces of the first electrode assembly and the second electrode assembly, the insulating member is configured to isolate the first electrode assembly from the housing and/or for isolating the second electrode assembly from the housing, and the flow guide is fixed to the insulating member.

The relative fixation between the flow guide and the electrode assembly enables the fifth through hole to correspond to the optimum liquid injection position of the electrode assembly and to be relatively fixed with each other, for example, the fifth through hole corresponds to the third through hole of the insulating structure between the two electrode assemblies, so that the fixed flow guide and the electrode assembly are jointly arranged in the housing, which can avoid the dislocation between the flow guide and the electrode assembly during the installation in the housing, thereby avoiding the situation that the fifth through hole cannot correspond to the optimum liquid injection position of the electrode assembly.

In some embodiments, the orthographic projection of the liquid injection hole facing the first surface is located in a region of the third through hole. In this way, after the electrolyte is injected through the liquid injection hole, almost all of the electrolyte can enter the interior of the insulating structure through the third through hole under the action of gravity, so as to avoid the electrolyte flowing to other positions inside the battery cell instead of entering the interior of the insulating structure due to the electrolyte deviating from the third through hole, thus affecting the infiltration efficiency of the electrolyte.

In some embodiments, the housing includes a casing, where the casing is a hollow structure with openings at two ends, the two ends are opposite two ends of the casing, and the first wall is any one of walls of the housing; and two cover plates, where the two cover plates are configured to cover the openings at two ends of the casing. The casing with openings at two ends is convenient for the electrode assembly to enter the casing, especially when the battery cell includes a plurality of electrode assemblies, where different electrode assemblies can enter the hollow part of the casing through different openings, so as to speed up the installation.

In some embodiments, the first wall is the wall with the smallest area of the casing. In order to improve the heat dissipation efficiency of the battery cell, the wall with the largest area of the casing is generally arranged to correspond to the surface with the largest area of the electrode assembly. Therefore, the first wall is usually not provided as the wall with the largest area of the casing, so that on the one hand, the influence of the liquid injection hole on heat dissipation on the first wall is avoided; on the other hand, the wall with the largest area usually has a large deformation. If the liquid injection hole is arranged on the wall with the largest area, it is not conducive to the sealing effect of the sealing assembly for sealing the liquid injection hole. The deformation of the wall with the largest area will lead to the deformation of the sealing assembly, which will lead to the sealing failure and affect the safety and performance of the battery cell.

The first electrode assembly is disposed insulated from the second electrode assembly, a positive electrode terminal and a negative electrode terminal are disposed on each of the two cover plates, and the positive electrode terminal and the negative electrode terminal on each of the two cover plates are electrically connected to an electrode assembly adjacent thereto for deriving electrical energy from the electrode assembly.

In the solution, the first electrode assembly and the second electrode assembly are insulated, and the current generated by the first electrode assembly and the current generated by the second electrode assembly are respectively led out through the first electrode terminal and the second electrode terminal, and the first electrode assembly and the second electrode assembly do not need to transmit current to each other, so that the conductive path of the first electrode assembly and the conductive path of the second electrode assembly can be shortened, which reduces the internal resistance and heat generation, increases the power of the battery cell, and improves the charging and discharging performance of the battery cell.

In this way, the battery cell 20 can be depressurized under a controllable pressure or temperature, thereby avoiding potentially more serious accidents.

In some embodiments, the battery cell includes a first electrode assembly group and a second electrode assembly group arranged in the first direction, wherein the first electrode assembly group includes a plurality of the first electrode assemblies arranged in the second direction, the second electrode assembly group includes a plurality of the second electrode assemblies arranged in the second direction, and an identical insulating structure is sandwiched between the first electrode assembly group and the second electrode assembly group. In this way, it is convenient for machining, and the internal space of the common insulating structure can be increased to store more electrolytes, which can speed up the injection speed of electrolyte.

In the second aspect, a battery is provided, which includes a plurality of battery cells, where the battery cell is that described in the first aspect.

In the third aspect, an electrical device is provided, which includes the battery cell described in the first aspect.

In some embodiments, the electrical device is a vehicle, a ship or a spacecraft.

In the fourth aspect, a method of manufacturing a battery cell is provided, which includes: providing a first electrode assembly and a second electrode assembly arranged in a first direction; providing an insulating structure, where the insulating structure is disposed between the first electrode assembly and the second electrode assembly, the insulating structure includes a second wall and a third wall, the second wall is opposite to a first end face of the first electrode assembly, the third wall is opposite to a second end face of the second electrode assembly, the second wall is provided with a first through hole, the third wall is provided with a second through hole; providing a housing, where the housing is provided with a receiving cavity, the receiving cavity is configured to receive the insulating structure, the first electrode assembly and the second electrode assembly, the housing has a first wall, the first wall is provided with a liquid injection hole, and a first surface of the insulating structure facing the first wall has a third through hole; and injecting electrolyte through the liquid injection hole, where the electrolyte flows into the insulating structure through the third through hole, the electrolyte in the interior of the insulating structure flows to the first electrode assembly through the first through hole, and flows to the second electrode assembly through the second through hole.

In the fifth aspect, a device for manufacturing a battery cell is provided, which includes modules for executing the method of the fourth aspect.

### BRIEF DESCRIPTION OF DRAWINGS

FIG. 1 is a structural schematic diagram of a vehicle disclosed in an embodiment of the present application;
FIG. 2 is an exploded schematic diagram of the battery disclosed in an embodiment of the present application;
FIG. 3 is a structural schematic diagram of a battery cell disclosed in an embodiment of the present application;
FIG. 4 is an exploded schematic diagram of the battery cell disclosed in an embodiment of the present application;
FIG. 5 to FIG. 7 are cross-sectional views of a first electrode assembly provided by an embodiment of the present application;
FIG. 8 is a structural schematic diagram of an insulating structure disclosed in an embodiment of the present application;
FIG. 9 is a top view of the insulating structure disclosed in an embodiment of the present application;
FIG. 10 is a cross-sectional view of the insulating structure disclosed in an embodiment of the present application;
FIG. 11 is another cross-sectional view of the insulating structure disclosed in an embodiment of the present application;
FIG. 12 is a structural schematic diagram of another battery cell disclosed in an embodiment of the present application;
FIG. 13 is an exploded schematic diagram of another battery cell disclosed in an embodiment of the present application;
FIG. 14 is a structural schematic diagram of a flow guide disclosed in an embodiment of the present application;
FIG. 15 is a top view of the flow guide disclosed in an embodiment of the present application;
FIG. 16 is a cross-sectional view of the flow guide disclosed in an embodiment of the present application;
FIG. 17 is a schematic flow chart of a method of manufacturing a battery cell disclosed in an embodiment of the present application; and
FIG. 18 is a schematic block diagram of a device for manufacturing a battery cell disclosed in an embodiment of the present application.

In the drawings, the drawings are not drawn to actual scale.

### DESCRIPTION OF THE EMBODIMENTS

The following further describes the implementations of the present application in detail with reference to the accompanying drawings and embodiments. Detailed description of the following embodiments and accompanying drawings are configured to illustratively state the principles of the present application, but not to limit the scope of the present application, that is, the present application is not limited to the embodiments described.

In the description of the present application, it should be noted that, unless otherwise noted, "a plurality of" means two or more; orientation or positional relationships indicated by the terms "upper", "lower", "left", "right", "inner", "outer", and the like are only for the convenience of description of the present application and simplification of description rather than indicating or implying that the referenced device or element must have a particular orientation, be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; it can be "directly connected" or "indirectly connected through an intermediate medium". The specific meanings of the above terms in the present application may be understood by those of ordinary skill in the art depending on specific circumstances.

In the embodiments of the present application, like reference numerals denote like components, and for the sake of brevity, detailed description of the same components is omitted in different embodiments. It should be understood that the dimensions such as thickness, length and width of various components and the overall thickness, length and width of the integrated device in the embodiments of the present application shown in the drawings are illustrative only and should not be defined in any way.

The battery cell in the present application may include a lithium-ion secondary battery, a lithium-ion primary battery, a lithium-sulfur battery, a sodium-lithium-ion battery, a sodium-ion battery, a magnesium-ion battery, and the like, and which are not limited in the embodiments of the present application. The battery cell may be cylindrical, flat, cuboid or in other shapes, which are not limited in the embodiments of the present application either. Battery cells are generally divided into three types according to the packaging mode: cylindrical battery cells, rectangular battery cells and pouch battery cells, which are not limited to the embodiments of the present application either.

The battery referred to in the embodiments of the present application refers to a single physical module that includes one or more battery cells to provide higher voltage and capacity. For example, the battery mentioned in the present application may include a battery module or a battery pack or the like. The battery generally includes a case for encapsulating one or more battery cells. The case can avoid liquid or other foreign matter affecting the charging or discharging of the battery cells.

The battery cell includes an electrode assembly and an electrolyte, the electrode assembly is composed of a positive plate, a negative plate and a separator. Battery cells work mainly depending on movement of metal ions between positive and negative plates. The positive plate includes a positive current collector and a positive active material layer, the positive active material layer is coated on a surface of the positive current collector, the positive current collector not coated with the positive active material layer protrudes from the positive current collector coated with the positive active material layer, and the positive current collector not coated with the positive active material layer serves as a positive tab. In the case of lithium ion batteries, a material of the positive current collector can be aluminum, and the positive active material can be lithium cobaltate, ferrous lithium phosphate, ternary lithium or lithium manganate, etc. The negative plate includes a negative current collector and a negative active material layer. The negative active material layer is coated on a surface of the negative current collector, the negative current collector not coated with the negative active material layer protrudes from the negative current collector coated with the negative active material layer, and the negative current collector not coated with negative the negative active material layer serves as a negative tab. A material of the negative current collector can be copper, and the negative active material can be carbon or silicon. In order to ensure that a large current is passed without fusing, a plurality of positive tabs are provided and stacked together, and a plurality of negative tabs are provided and stacked together. The separation film may be made from polypropylene (PP) or polyethylene (PE), etc. Further, the electrode assembly may be a coiled structure or a laminated structure, and the embodiments of the present application are not limited thereto.

The housing of the battery cell is provided with a liquid injection hole, and the electrolyte is injected into the battery cell through the liquid injection hole. When the battery cell includes a plurality of electrode assemblies, how to ensure that the electrolyte injected through the liquid injection hole with a smaller size on the housing can meet the requirements of various electrode assembly on the infiltration effect is an urgent problem to be solved at present.

Therefore, the embodiments of the present application provide a battery cell, the first wall of the battery cell is provided with a liquid injection hole, the battery cell includes a first electrode assembly and a second electrode assembly arranged in a first direction, and a hollow insulating structure is arranged between the first electrode assembly and the second electrode assembly. The insulating structure has a second wall opposite to the first end face of the first battery cell, and also has a third wall opposite to the second end face of the second battery cell, where the second wall is provided with a first through hole and the third wall is provided with a second through hole. In addition, the first surface of the insulating structure facing the first wall is provided with a third through hole. During liquid injection, the electrolyte flows into the battery cell through the liquid injection hole, and the electrolyte can flow into the hollow insulating structure through the third through hole. Thus, the electrolyte in the interior of the insulating structure can flow to the first electrode assembly through the first through hole on the second wall corresponding to the first end face, and this part of the electrolyte infiltrates the first electrode assembly through the first end face. In addition, the electrolyte in the insulating structure can further flow to the second electrode assembly through the second through hole on the third wall corresponding to the second end face, and this part of the electrolyte infiltrates the second electrode assembly through the second end face. With the arrangement of the insulating structure, the electrolyte can enter the two electrode assemblies at the same time, thereby achieving the effect of uniformly and quickly infiltrating the two electrode assemblies, improving the infiltrating efficiency and infiltrating effect of the battery cell, and also improving the machining efficiency and electrochemical performance of the battery cell.

The technical solution described in the embodiments of the present application is applicable to various electrical devices using batteries.

The electrical device may be a vehicle, a mobile phone, a portable device, a notebook computer, a ship, a spacecraft, an electric toy, an electric tool, and the like. Vehicles can be fuel vehicles, gas vehicles or new energy vehicles, and new energy vehicles can be pure electric vehicles, hybrid vehicles or extended-range vehicles. Spacecraft include airplanes, rockets, space shuttles and spaceships, etc. Electric toys include fixed or mobile electric toys, such as game machines, electric car toys, electric ship toys, electric plane toys and so on. Electric tools include metal slitting electric tools, grinding electric tools, assembly electric tools and railway electric tools, such as electric drills, electric grinders, electric wrenches, electric screwdrivers, electric hammers, impact electric drills, concrete vibrators and planers, etc. The embodiments of the present application do not impose special restrictions on the above-mentioned electrical device.

For convenience of explanation, the following embodiments will be explained by taking the electrical device as a vehicle as an example.

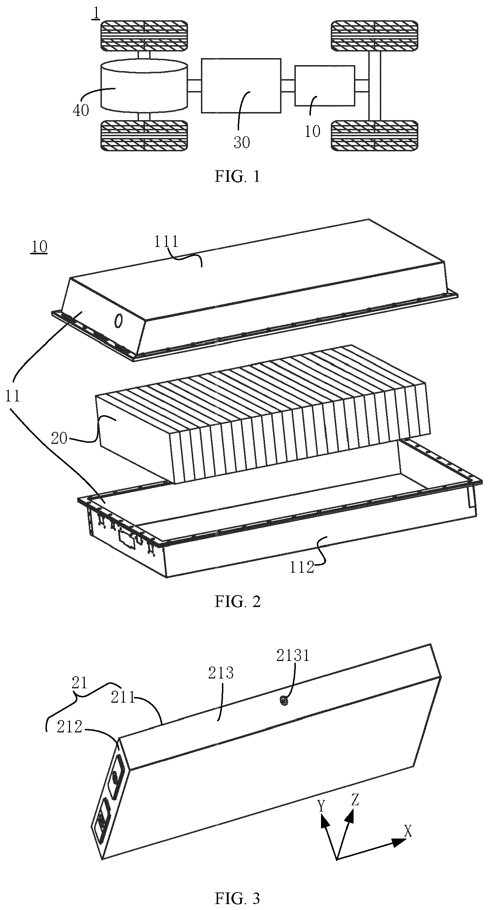

For example, as shown in FIG. 1, which is a structural schematic diagram of a vehicle 1 according to an embodiment of the present application. The vehicle 1 may be an oil-fueled vehicle, a gas vehicle or a new energy vehicle, and the new energy vehicle may be a pure electric vehicle, a hybrid vehicle or an extended-range vehicle. A motor 40, a controller 30 and a battery 10 may be provided inside the vehicle 1. The controller 30 controls the battery 10 to supply power to the motor 40. For example, the battery 10 may be provided at a bottom of the vehicle or at front or rear of the vehicle 1. The battery 10 may be used for supplying power to the vehicle 1. For example, the battery 10 may be used as an operational power supply of the vehicle 1, for the circuitry of the vehicle 1, for example, for the operational power demand during startup, navigation and running of the vehicle 1. In another embodiment of the present application, the battery 10 may be used not only as an operational power supply of the vehicle 1, but also as a driving power supply of the vehicle 1, providing driving power for the vehicle 1 instead or in part instead of fuel oil or natural gas.

In order to meet different power requirements, the battery may include a plurality of battery cells, where the plurality of battery cells may be connected in series or in parallel or in parallel-series connection, and the parallel-series connection refers to a combination of series and parallel connections. Batteries can also be referred to battery packs. For example, a plurality of battery cells can be first connected in series or in parallel or in parallel-series connection to form a battery module, and then a plurality of battery modules are connected in series or in parallel or in parallel-series connection to form a battery. That is to say, a plurality of battery cells can directly form a battery, or they can form battery modules first, and then the battery modules can form a battery.

For example, FIG. 2 illustrates a schematic structural diagram of a battery 10 according to an embodiment of the present application, where the battery 10 may include a plurality of battery cells 20. The battery 10 may also include a case 11, the case 11 is hollow inside, and a plurality of battery cells 20 are received in the case 11. FIG. 2 shows a possible implementable of the case 11 according to embodiments of the present application, as shown in FIG. 2, the case 11 may include two portions referred to herein respectively as a first portion 111 and a second portion 112, and the first portion 111 and the second portion 112 are snapped together. Shapes of the first portion 111 and the second portion 112 may be determined according to the shape of the plurality of battery cells 20 when being combined, and at least one of the first portion 111 and the second portion 112 has one opening. For example, as shown in FIG. 2, each of the first portion 111 and the second portion 112 may be a hollow cuboid with only one surface having an opening, the opening of the first portion 111 and the opening of the second portion 112 are disposed opposite each other, and the first portion 111 and the second portion 112 are snapped with each other to form a case 11 having a closed chamber.

As a further example, unlike that shown in FIG. 2, only one of the first portion 111 and the second portion 112 may be a hollow cuboid with an opening, and the other one is in the form of a plate to cap the opening. For example, in the case that the second portion 112 is a hollow cuboid and has only one surface with an opening, and the first portion 111 is in the form of a plate, the first portion 111 is capped over the opening of the second portion 112 to form the case 11 having a closed chamber that can be used to receive a plurality of battery cells 20. A plurality of battery cells 20 are combined in parallel or in series or in parallel-series connection with each other and placed in the case 11 formed by snapping the first portion 111 and the second portion 112.

In some embodiments, the battery 10 may also include other structures, which will not be described here. For example, the battery 10 may also include a bus component for effecting electrical connection between a plurality of battery cells 20 such as in parallel or series or in parallel-series connection. Specifically, the bus component may achieve the electrical connection between the battery cells 20 by connecting electrode terminals of the battery cells 20. Further, the bus component may be fixed to the electrode terminals of the battery cells 20 by soldering. The electric energy of the plurality of battery cells 20 can be further led out by a conductive mechanism passing through the case 11.

The number of battery cells 20 in the battery 10 may be set to any value according to different power demands. A plurality of battery cells 20 may be connected in series, in parallel, or in parallel-series to achieve a larger capacity or power. Since the number of battery cells 20 included in each battery 10 may be large, the battery cells 20 are arranged in groups and each group of battery cells 20 constitutes a battery module in order to facilitate installation. The number of battery cells 20 included in the battery module is not limited and can be set according to requirements.

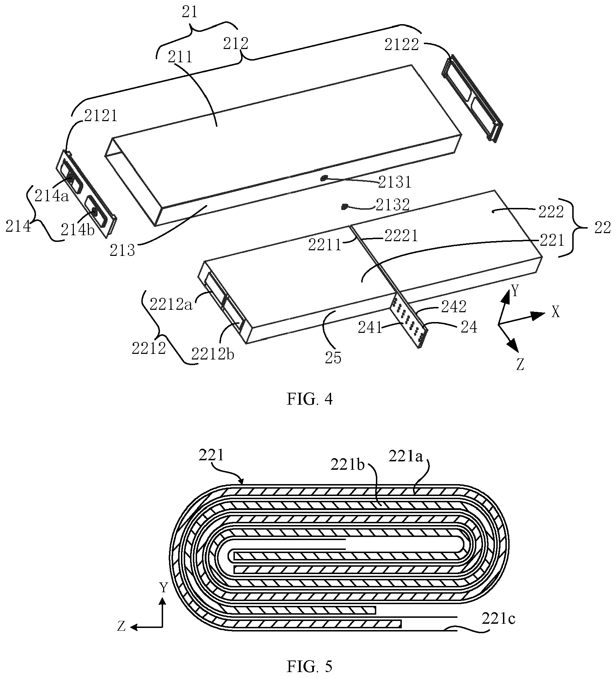

FIG. 3 shows a schematic diagram of the battery cell 20 according to the embodiments of the present application, and FIG. 4 shows a possible exploded schematic diagram of the battery cell 20 according to the embodiments of the present application, for example, the battery cell 20 shown in FIG. 4 may be an exploded schematic diagram of the battery cell 20 as shown in FIG. 3. As shown in FIGS. 3 and 4, the battery cell 20 according to the embodiments of the present application includes: a housing 21 being provided with a receiving cavity, the housing 21 having a first wall 213, and the first wall 213 is provided with a liquid injection hole 2131; a first electrode assembly 221 and a second electrode assembly 222 arranged in a first direction, the first electrode assembly 221 and the second electrode assembly 222 being received in each of the receiving cavity; and an insulating structure 24, the insulating structure 24 being disposed between the first electrode assembly 221 and the second electrode assembly 222, the insulating structure 24 comprising a second wall 241 and third wall 242, where the second wall 241 is opposite to a first end face 2211 of the first electrode assembly 221, the third wall 242 is opposite to a second end face 2221 of the second electrode assembly 222, the second wall 241 is provided with a first through hole 2411, the third wall 242 is provided with a second through hole 2421, a first surface 243 of the insulating structure 24 facing the first wall 213 is provided a third through hole 2431, and the third through hole 2431 is configured to introduce electrolyte injected through the liquid injection hole 2131 into an interior of the insulating structure 24 so that the electrolyte in the interior of the insulating structure 24 flows to the first electrode assembly 221 through the first through hole 2411 and to the second electrode assembly 222 through the second through hole 2421.

It should be understood that the battery cell 20 according to the embodiments of the present application has a housing 21, the housing 21 is provided with a receiving cavity inside such that the battery cell 20 is of a hollow polyhedral structure. Specifically, the housing of the battery cell 20 may include a plurality of walls, and the first wall 213 is any one of the plurality of walls, and the first wall 213 has a liquid injection hole 2131 to inject an electrolyte into an interior of the battery cell 20 through the liquid injection hole 2131.

Since a hollow insulating structure 24 is provided between the first electrode assembly 221 and the second electrode assembly 222, and the third through hole 2431 is provided on the first surface 243 of the insulating structure 24 facing the first wall 213, the electrolyte injected through the liquid injection hole 2131 can flow into the hollow insulating structure 24 through the third through hole 2431. Thus, the electrolyte in the interior of the insulating structure 24 can flow to the first electrode assembly 221 through the first through hole 2411 on the second wall 241 corresponding to the first end face 2211, and this part of the electrolyte infiltrates the first electrode assembly 221 through the first end face 2211. In addition, the electrolyte in the insulating structure 24 can further flow to the second electrode assembly 222 through the second through hole 2421 on the third wall 242 corresponding to the second end face 2221, and this part of the electrolyte infiltrates the second electrode assembly 222 through the second end face 2221, thereby achieving the effect of uniformly and rapidly infiltrating the two electrode assemblies 22, improving the infiltrating efficiency and infiltrating effect of the battery cell 20, and also improving the machining efficiency and electrochemical performance of the battery cell 20.

On the contrary, if the insulating structure 24 and other insulating structures are not provided between the first electrode assembly 221 and the second electrode assembly 222, a gap between the first electrode assembly 221 and the second electrode assembly 222 is small, and the electrolyte enters the battery cell 20 through the liquid injection hole 2131, and seeps slowly through the gap between the first electrode assembly 221 and the second electrode assembly 222, then seeps into the first electrode assembly 221 through the first end face 2211 of the first electrode assembly 221, and seeps into the second electrode assembly 222 through the second end face 2221 of the second electrode assembly 222. The whole process is slow. If the electrolyte injected from the liquid injection hole 2131 is too fast, most of the electrolyte will flow to other directions, which is not conducive to the infiltration effect of the two electrode assemblies 22.

Alternatively, if a solid insulating structure is provided between the first electrode assembly 221 and the second electrode assembly 222, the electrolyte flows to the solid insulating structure after entering the battery cell 20 through the liquid injection hole 2131, in which a part of the electrolyte slowly seeps into the first electrode assembly 221 through the gap between the solid insulating structure and the first electrode assembly 221, a part of the electrolyte slowly seeps into the second electrode assembly 222 through the gap between the solid insulating structure and the second electrode assembly 222, and a part of the electrolyte splashes on the surface of the solid insulating structure facing the first wall 213, which not only affects the speed of the electrolyte flowing to the first electrode assembly 221 and the second electrode assembly 222, but also affects the infiltration effect of the first electrode assembly 221 and the second electrode assembly 222.

Therefore, the hollow insulating structure 24 of the embodiments of the present application can well solve the above-mentioned problems, reasonably guide the flow direction of the electrolyte, so that the electrolyte can rapidly infiltrate the first electrode assembly 221 and the second electrode assembly 222, thereby improving the infiltration efficiency and the infiltration effect of the two electrode assemblies 22, thereby improving the machining efficiency and electrochemical performance of the battery cell 20.

It should be understood that as shown in FIGS. 3 and 4, the housing 21 of embodiments of the present application may be of a polyhedral structure. Specifically, the housing 21 may include a casing 211 and a cover plate 212. The casing 211 may be a hollow structure with at least one end forming an opening, and the shape of the cover plate 212 may fit the shape of the casing 211, and the cover plate 212 is used to cover the opening of the casing 211 so that the housing 21 isolates an internal environment of the battery cell 20 from an external environment. If the casing 211 is a hollow structure with an opening at one end, one cover plate 212 may be provided. If the casing 211 is a hollow structure with openings formed at opposite ends, two cover plates 212 may be provided, and the two cover plates 212 respectively cover the openings at both ends of the casing 211.

The casing 211 according to the embodiments of the present application may be made of a variety of materials such as copper, iron, aluminum, steel, aluminum alloy and the like. The cover plate 212 may also be made of a variety of materials, such as copper, iron, aluminum, steel, aluminum alloy, etc. The cover plate 212 and the casing 211 may be made of the same or different materials.

The housing 21 according to the embodiments of the present application may be of a variety of shapes such as a cylinder, a cuboid or the like. The shapes of the casing 211 and the cover plate 212 are matched with each other. For example, as shown in FIGS. 3 and 4, the casing 211 may be of a cuboid structure, and the cover plate 212 is of a rectangular plate-like structure for fitting the casing 211.

For convenience of illustration, the present application takes as an example the inclusion of two cover plates 212 and the housing 21 being a cuboid. Specifically, as shown in FIGS. 3 and 4, the housing 21 includes a casing 211 and two cover plates 212. The casing 211 has a hollow structure with openings at two ends, and the two ends are opposite ends of the casing 211. Two cover plates 212 are respectively used to cover the openings at two ends of the casing 211. The two cover plates 212 include a first cover plate 2121 and a second cover plate 2122, and the first cover plate 2121 and the second cover plate 2122 are respectively positioned at opposite ends to cover the two ends of the casing 211. The casing 211 with openings at two ends is convenient for the electrode assembly 22 to enter the housing, especially when the battery cell 20 includes a plurality of electrode assemblies 22, where different electrode assemblies 22 can enter the hollow part of the casing 211 through different openings, so as to speed up the installation.

In the battery cell 20, one or more electrode assemblies 22 in the casing 211 may be provided according to actual use requirements. For example, FIGS. 3 and 4 take as an example that the battery cell 20 includes two electrode assemblies 22 arranged in a first direction X, each of the two electrode assemblies 22 includes a first electrode assembly 221 and a second electrode assembly 222, but the embodiments of the present application are not limited thereto.

It should be understood that the battery cell 20 according to the embodiments of the present application may also include more than two electrode assemblies. For example, the battery cell 20 may include a first electrode assembly group and a second electrode assembly group, the first electrode assembly group includes a plurality of first electrode assemblies 221 arranged in a second direction Y, and the second electrode assembly group includes a plurality of second electrode assemblies 222 arranged in the second direction Y. The number of the electrode assemblies 22 of the first electrode assembly group is equal to the number of the electrode assemblies 22 of the second electrode assembly group, then any one of the electrode assemblies 22 of the first electrode assembly group may be applicable to the description of the first electrode assembly 221 according to the embodiments of the present application, and correspondingly, the electrode assemblies 22 in the second electrode assembly group adjacent thereto in the first direction X may be applicable to the description of the second electrode assembly 222 according to the embodiments of the present application. In addition, the same insulating structure 24 can be clamped between the first electrode assembly group and the second electrode assembly group, which is convenient for machining and can increase the internal space of the insulating structure 24. Hereinafter, the first electrode assembly 221 and the second electrode assembly 222, as shown in FIGS. 3 and 4, are mainly described as examples.

The electrode assembly 22 according to the embodiments of the present application is a component of the battery cell 20 where an electrochemical reaction occurs. The electrode assembly 22 may be a cylinder, a cuboid or the like. If the electrode assembly 22 is a cylinder structure, the casing 211 may be a cylinder structure. If the electrode assembly 22 is a cuboid structure, the casing 211 may be a cuboid structure.

For any one of the electrode assemblies 22, the electrode assembly 22 may include a tab and a body portion. For example, in the case of the first electrode assembly 221 in FIGS. 3 and 4, the first electrode assembly 221 may be any one of a plurality of electrode assemblies 20 included in the battery cell 20. The tab 2212 of the first electrode assembly 221 may include a positive tab 2212a and a negative tab 2212b, the positive tab 2212a may be formed by laminating portions of the positive electrode plate not coated with the positive electrode active material layer, and the negative tab 2212b may be formed by laminating portions of the negative electrode plate not coated with the negative electrode active material layer. The body portion of the first electrode assembly 221 may be formed by laminating or winding portions of the positive electrode plate coated with the positive electrode active material layer and portions of a negative electrode plate coated with the negative electrode active material layer.

It should be understood that for any one of the electrode assemblies 22, the tabs of the electrode assemblies 22 may be located on the same end face or on different end faces. When the battery cell 20 includes a plurality of electrode assemblies 22, the tabs of the plurality of electrode assemblies 20 may also be located on the same corresponding end faces or on non-corresponding end faces, and the embodiments of the present application are not limited thereto.

The housing 21 according to the embodiments of the present application is also provided with an electrode terminal, which is electrically connected with the electrode assembly 22 to output the electric energy of the battery cell 20. In some embodiments, the electrode terminals may be disposed depending on the location of the tabs of the electrode assembly 22. For example, the battery cell 20 may include at least one set of electrode terminals corresponding to the tabs of the electrode assembly 22, each set of electrode terminals includes a positive electrode terminal and a negative electrode terminal, the positive electrode terminal is used for electrical connection with the positive tab, and the negative electrode terminal is used for electrical connection with the negative tab. The positive electrode terminal and the positive tab can be connected directly or indirectly, and the negative electrode terminal and the negative tab can be connected directly or indirectly. For example, the positive electrode terminal is electrically connected to the positive tab through one connection member, and the negative electrode terminal is electrically connected to the negative tab through one connection member.

With reference to the arrangement of the tabs of the electrode assembly 22, the same set of electrode terminals may be arranged on the same wall or different walls of the housing 21, and the different sets of electrode terminals may also be arranged on the same wall or different walls of the housing 21.

For convenience of explanation, the present application will be explained by taking an example that the battery cell 20 includes a plurality of sets of electrode terminals. Specifically, for the first battery cell 221 and the second battery cell 222, the two tabs 2212 of the first electrode assembly 221 are disposed on the same end face, the two tabs of the second electrode assembly 222 are disposed on the same end face, the tabs of the first electrode assembly 221 and the tabs of the second electrode assembly 222 face opposite directions, and both face the outside of the battery cell 20. For the same electrode assembly 22, the tabs are arranged on the same end face of the electrode assembly 22, which is convenient for machining and for achieving the connection between the tabs and the electrode terminals. The tabs of the two electrode assemblies 22 face the outside of the battery cell 20, i.e., the two electrode assemblies 22 are not disposed on the opposite end faces of the two electrode assemblies 22, for example, as shown in FIGS. 3 and 4, the first end face 2211 of the first electrode assembly 221 faces the second end face 2221 of the second electrode assembly 222, and the first end face 2211 and the second end face 2221 are not provided with the tabs. Also, the tabs of the two electrode assemblies 22 face opposite directions. For example, as shown in FIGS. 3 and 4, the tab 2212 of the first electrode assembly 221 faces the negative direction of the first direction X, while the tab of the second electrode assembly 222 faces the positive direction of the first direction X. This arrangement of the two electrode assemblies 22 facilitates the electrical connection of each electrode assembly 22 to a corresponding electrode terminal.

In an embodiment of the present application, the first electrode assembly 221 is disposed insulated from the second electrode assembly 222, and a positive electrode terminal and a negative electrode terminal are disposed on each of the two cover plates 212, and the positive electrode terminal and the negative electrode terminal on each cover plate are electrically connected with the electrode assembly adjacent thereto to derive the electrical energy of the electrode assembly. The first electrode assembly 221 and the second electrode assembly 222 are insulated, and the current generated by the first electrode assembly 221 is led out through the corresponding electrode terminal 2212, while the current generated by the second electrode assembly 222 is led out through the electrode terminal corresponding to the second electrode assembly 222, so that the first electrode assembly 221 and the second electrode assembly 222 do not need to transmit current to each other, so that the conductive path of the first electrode assembly 221 and the conductive path of the second electrode assembly 222 can be shortened, which reduces the internal resistance and heat generation, increases the power of the battery cell 20, and improves the charging and discharging performance of the battery cell 20.

For example, as shown in FIGS. 3 and 4, a positive electrode terminal and a negative electrode terminal are provided on each of the two cover plates 212. In addition, the end face of the electrode assembly 22 facing the corresponding cover plate 212 is provided with tabs. Specifically, the first electrode assembly 221 is adjacent to the first cover plate 2121 of the two cover plates, and the end face of the first electrode assembly 221 facing the first cover plate 2121 is provided with a tab 2212, i.e., the tab 2212 included in the first electrode assembly 221 is located on the end face of the first electrode assembly 221 facing the first cover plate 2121, and the first cover plate 2121 includes a set of electrode terminals 214, where the positive electrode terminal 214a is used for electrically connecting with the positive tab 2212a of the first electrode assembly 221 and the negative electrode terminal 214b is used for electrically connecting with the negative tab 2212a of the first electrode assembly 221. Similarly, the second electrode assembly 222 is proximate to the second cover plate 2122 of the two cover plates, and the end face of the second electrode assembly 222 facing the second cover plate 2122 is provided with a tab, i.e., the second electrode assembly 222 includes a tab located on the end face of the second electrode assembly 222 facing the second cover plate 2122, the second cover plate 2122 includes a set of electrode terminals, where the positive electrode terminal of the second cover plate 2122 is used for electrically connecting with the positive tab of the second electrode assembly 222 and the negative electrode terminal of the second cover plate 2122 is used for electrically connecting with the negative tab of the second electrode assembly 222, but the embodiments of the present application are not limited thereto.

Since the two sets of electrode terminals are respectively arranged on the opposite two cover plates 212, a distance between the connection structure for achieving the electrical connection between the tabs 2212 of the first electrode assembly 221 and the electrode terminals 214 on the first cover plate 2121 and the connection structure for achieving the electrical connection between the tabs of the second electrode assembly 222 and the electrode terminals on the second cover plate 2122 is increased, thereby reducing the risk of interference and simplifying the assembly process.

In the embodiments of the present application, the electrical insulation between the first electrode assembly 221 and the second electrode assembly 222 can be achieved by the insulating structure 24 without providing additional insulating members, thus saving the internal space of the battery cell 20.

It should be understood that the electrode assemblies 22 according to the embodiments of the present application may be coiled or laminated or may be other types of electrode assemblies 22. When a plurality of electrode assemblies 22 are included in the same battery cell 20, the plurality of electrode assemblies 22 may be the same or different types of electrode assemblies 22. Specifically, as shown in FIGS. 3 and 4, in the two electrode assemblies 22 in the embodiments of the present application, the first end face 2211 of the first electrode assembly 221 faces the second electrode assembly 222. In the case of the first electrode assembly 221 and the first end face 2211, the possible types and placement positions of the electrode assembly 22 included in the battery cell 20 according to the embodiments of the present application will be described below.

In some embodiments, the first electrode assembly 221 may be coiled. In particular, FIG. 5 shows a possible cross-sectional schematic diagram of the first electrode assembly 221 according to the embodiments of the present application, where the cross section is perpendicular to the first direction X. As shown in FIG. 5, the first electrode assembly 221 includes a first electrode plate 221a and a second electrode plate 221b, and the first electrode plate 221a and the second electrode plate 221b are wound around a winding axis. The winding axis of the first electrode assembly 221 is parallel to the first direction X, and the first end face 2211 is perpendicular to the winding axis, i.e., the first end face 2211 is parallel to the cross section shown in FIG. 5.

As shown in FIG. 5, the first electrode assembly 221 further includes a separator 221c disposed between the first electrode plate 221a and the second electrode plate 221b. The separator 221c serves to isolate the first electrode plate 221a from the second electrode plate 221b for insulation. In some embodiments, the first electrode plate 221a, the second electrode plate 221b and the separator 221c are all ribbon-shaped structures. The first electrode plate 221a, the second electrode plate 221b and the separator 221c are laminated and wound at least twice along the winding axis to form the first electrode assembly 221. The separator 221c may be the aforementioned separation film, and the material thereof may be polypropylene, polyethylene or the like.

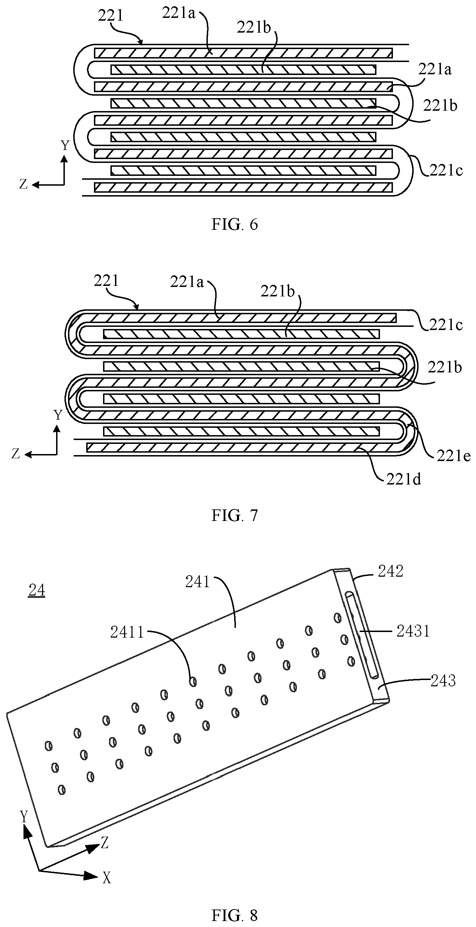

In some embodiments, the first electrode assembly 221 may also be laminated. In particular, FIG. 6 shows another possible cross-sectional schematic diagram of the first electrode assembly 221 according to the embodiments of the present application, where the cross section is perpendicular to the first direction X. As shown in FIG. 6, the first electrode assembly 221 includes a plurality of first electrode plates 221a and a plurality of second electrode plates 221b, and the plurality of first electrode plates 221a and the plurality of second electrode plates 221b are alternately laminated in the second direction Y. The second direction Y may be set perpendicular to the first direction X, and the first end face 2211 may be set perpendicular to the first direction X, i.e., the first end face 2211 is parallel to the cross section shown in FIG. 6.

As shown in FIG. 6, the first electrode assembly 221 further includes a separator 221c, and the separator 221c is used for isolating adjacent first electrode plates 221a and second electrode plates 221b for insulation.

In some embodiments, the laminated first electrode assemblies 221 may also be laminated in other ways. In particular, FIG. 7 shows another possible cross-sectional schematic diagram of the first electrode assembly 221 according to the embodiments of the present application, where the cross section is perpendicular to the first direction X. As shown in FIG. 7, the first electrode assembly 221 includes a first electrode plate 221a and a plurality of second electrode plates 221b. The first electrode plate 221a includes a plurality of stacking sections 221d and a plurality of bending sections 221e, the bending section 221e is used for connecting two adjacent stacking sections 221d, and the plurality of second electrode plates 221b and the plurality of stacking sections 221d are alternately stacked in the second direction Y. The second direction Y may be set perpendicular to the first direction X, and the first end face 2211 may be set perpendicular to the first direction X. Further, the first end face 2211 may also be arranged perpendicular to the bending section 221e, i.e., the first end face 2211 is perpendicular to an extension direction of each bending section 221e, to avoid the first end face 2211 being arranged as an end face including a plurality of bending sections 221e, thereby avoiding the need for electrolyte to pass through the bending section 221e to infiltrate the first electrode assembly 221, so as to improve the infiltration efficiency.

As shown in FIG. 7, the first electrode assembly 221 further includes a separator 221c, and the separator 221c is used for isolating adjacent first electrode plates 221a and second electrode plates 221b for insulation.

It should be understood that the first electrode plate and the second electrode plate are two electrode plates with opposite polarities. For example, if the first electrode plate is a positive electrode plate, the second electrode plate is a negative electrode plate. If the first electrode plate is a negative electrode plate, the second electrode plate is a positive electrode plate. FIGS. 5 to 7 show a solution in which the first electrode plate 221a is a negative electrode plate and the second electrode plate 221b is a positive electrode plate.

The first end face 2211 of the first electrode assembly 221 is provided in the above manner, and the end of the electrode plate is exposed to the first end face 2211. When the electrolyte contacts the first end face 2211, the electrolyte can quickly infiltrate various layers of the electrode plate of the first electrode assembly 221 through the first end face 2211, so that the infiltrating effect of various layers of the electrode plate of the first electrode assembly 221 is more uniform, thereby improving the infiltrating efficiency of the first electrode assembly 221.

The above-described arrangement of the first electrode assembly 221 and the first end face 2211 is likewise applicable to the arrangement of the second electrode assembly 222 and the second end face 2221. The second end face 2221 of the second electrode assembly 222 faces the first electrode assembly 221. Specifically, the first electrode assembly 221 and the first electrode assembly 222 may be the same type or different types of electrode assembly 22. For example, the first electrode assembly 221 and the second electrode assembly 222 may both be coiled, or of the same type of laminated for ease of machining. In addition, when the first end face 2211 and the second end face 2221 opposite each other are arranged in the above manner, when the electrolyte flows from the insulating structure 24 to the first end face 2211 and the second end face 2221, the electrolyte can quickly infiltrate various layer of the electrode plate of the first electrode assembly 221 and the second electrode assembly 222 through the first end face 2211 and the second end face 2221, respectively, and the infiltration effect of the first electrode assembly 221 and the second electrode assembly 222 can be more uniform, and thus the infiltration efficiency of the first electrode assembly 221 and the second electrode assembly 222 is improved.

For convenience of explanation, in the case that the first end face 2211 of the first electrode assembly 221 and the second end face 2221 of the second electrode assembly 222 according to the embodiments of the present application are provided in the above manner, the infiltration effect is optimum when the electrolyte flows between the first end face 2211 and the second end face 2221.

In the embodiments of the present application, with reference to the arrangement of the first end face 2211 and the second end face 2221, the two tabs 2212 of the first electrode assembly 221 may be arranged on the surface parallel to and opposite to the first end face 2211, and the two tabs of the second electrode assembly 222 may also be arranged on the surface parallel to and opposite to the second end face 2221 to facilitate machining.

In some embodiments, the first direction X is the length direction of the battery cell 20. Specifically, as shown in FIGS. 3 and 4, when the battery cell 20 is a cuboid, by arranging the two electrode assemblies 22 in the length direction of the battery cell 20, the size of the battery cell 20 in the length direction can be increased, so that when a plurality of battery cells 20 are assembled into a battery 10, an internal space of the battery 10 can be fully utilized, that is, the space utilization rate of the battery 10 can be improved, and further the energy density of the battery 10 can be improved. In addition, in view of the above-described arrangement and shape of the first electrode assembly 221 and the second electrode assembly 222, correspondingly, the two cover plates 212 may be perpendicular to the first direction X, respectively, that is, the first cover plate 2121 and the second cover plate 2122 are the walls with the smallest area of the battery cell 20. Thus, the surface of each electrode assembly 22 that is prone to expansion due to temperature factor corresponds to the wall with the largest area of the battery cell 20, that is, the position of the electrode assembly 22 that is most susceptible to expansion due to heat, is perpendicular to the wall with the largest area of the battery cell 20, thereby facilitating heat dissipation of the battery cell 20 and reducing expansion.

In the embodiments of the present application, the first wall 213 is any one of the walls of the casing 211. As shown in FIGS. 3 and 4, both of the cover plates 212 according to the embodiments of the present application are provided with electrode terminals and correspond to different electrode assemblies 22 that are electrically insulated. Therefore, if the liquid injection hole 2131 is provided on any one of the cover plates 212, for example, if the liquid injection hole 2131 is provided on the first cover plate 2121, the infiltration effect of the second electrode assembly 222 corresponding to the second cover plate 2122 may be affected. Therefore, the liquid injection hole 2131 may be provided on the casing 211, that is, the first wall 213 provided with the liquid injection hole 2131 may be any one wall of the casing 211, so as to improve the infiltration effect of each electrode assembly 22 inside the battery cell 20.

Further, the first wall 213 is generally not the largest wall of the casing 211. For example, the first wall 213 is the wall with the smallest area of the casing 211. In order to improve the heat dissipation efficiency of the battery cell 20, the wall with the largest area of the casing 211 is generally provided to correspond to the surface with the largest area of the electrode assembly 22. Therefore, the first wall 213 is usually not provided as the wall with the largest area of the casing 211, so that on the one hand, the influence of the liquid injection hole 2131 on heat dissipation on the first wall 213 is avoided. On the other hand, the wall with the largest area usually has a large deformation. If the liquid injection hole 2131 is arranged on the wall with the largest area, it is not conducive to the sealing effect of the sealing assembly 2132 for sealing the liquid injection hole 2131. The deformation of the wall with the largest area will lead to the deformation of the sealing assembly 2132, which will lead to the sealing failure and affect the safety and electrochemical performance of the battery cell 20.

It should be understood that the battery cell 20 according to the embodiments of the present application may also include a sealing assembly 2132, and the sealing assembly 2132 is used for sealing the liquid injection hole 2131. The sealing assembly 2131 may be implemented in a variety of ways, and the sealing assembly 2132 may be a non-detachable structure or a detachable structure, and the embodiments of the present application are not limited thereto. For example, the sealing assembly 2132 may be a sealing pin.

It should be understood that as shown in FIGS. 3 and 4, the orthographic projection of the liquid injection hole 2131 facing the first surface 243 is located within the region of the third through hole 2431. In this way, after the electrolyte is injected through the liquid injection hole 2131, almost all of the electrolyte can enter the interior of the insulating structure 24 through the third through hole 2431 under the action of gravity, so as to avoid the electrolyte flowing to other positions inside the battery cell 20 instead of entering the interior of the insulating structure 24 due to the electrolyte deviating from the third through hole 2431, thus affecting the infiltration efficiency of the electrolyte.

The insulating structure 24 according to the embodiments of the present application will be described in detail below with reference to the accompanying drawings.

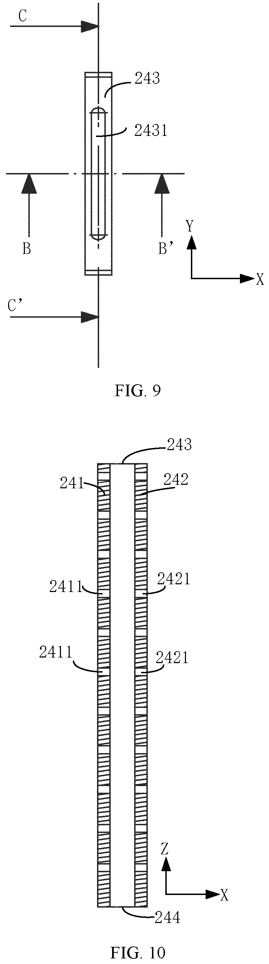

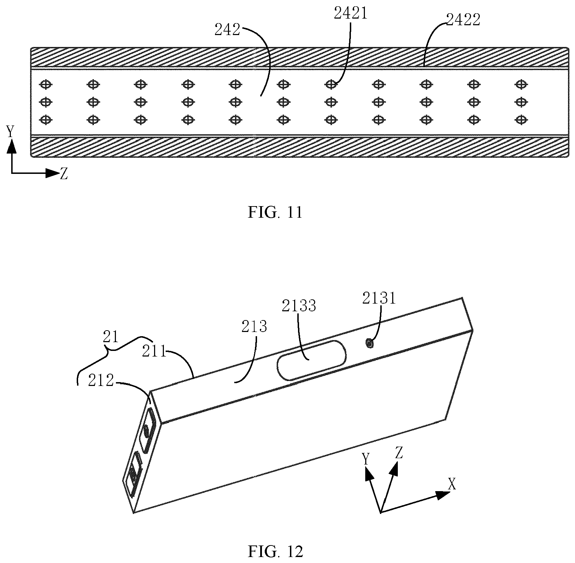

FIG. 8 shows a schematic structural diagram of an insulating structure 24 according to the embodiments of the present application. FIG. 9 illustrates a top view of the insulating structure 24 according to the embodiments of the present application, i.e., FIG. 9 shows a schematic view of a first surface 243 of the insulating structure 24. FIG. 10 shows a cross-sectional view of the insulating structure 24 according to the embodiments of the present application, FIG. 10 may be a cross-sectional view taken in a B-B' direction shown in FIG. 9, i.e., the cross-sectional view shown in FIG. 10 is a plane perpendicular to the second direction Y. FIG. 11 shows another cross-sectional view of the insulating structure 24 according to the embodiments of the present application, FIG. 11 may be a cross-sectional view taken in a C-C' direction shown in FIG. 9, i.e., the cross-sectional view shown in FIG. 11 is a plane perpendicular to the first direction X.

In the embodiments of the present application, the insulating structure 24 may be of any regular or irregular shape. For convenience of explanation, the present application mainly takes the cuboid insulating structure 24 as an example. On the one hand, the cuboid insulating structure 24 is convenient for machining, and on the other hand, the cuboid insulating structure 24 is more space-saving inside the cuboid housing 21, and the cuboid insulation structure, resembling the cuboid shape between two electrode assemblies 22, can improve the space utilization rate inside the battery cell 20.

As shown in FIGS. 4-11, the insulating structure 24 further includes a second surface 244 corresponding to the first surface 243, the second surface 244 is located away from the first wall 213 and opposite the first surface 243. Further, the second surface 244 is provided with a fourth through hole, the fourth through hole is used for the electrolyte inside the insulating structure 24 to flow to the first electrode assembly 221 and the second electrode assembly 222 through the fourth through hole, so as to further accelerate the outflow rate of the electrolyte inside the insulating structure 24, that is, to accelerate the infiltration rate of the electrolyte infiltrating the first electrode assembly 221 and the second electrode assembly 222. Alternatively, the second surface 244 may be one wall of the insulating structure 24, i.e., the fourth through hole may not be provided on the second surface 244, and the electrolyte inside the insulating structure 24 only flows out through the first through hole 2411 on the second wall 241 and the second through hole 2421 on the third wall 242.

It should be understood that the insulating structure 24 according to the embodiments of the present application is a hollow structure and that the insulating structure 24 may be implemented in a variety of ways. For example, the insulating structure 24 may be formed by perforation on a solid insulating material. Specifically, as shown in FIGS. 4 to 11, the insulating structure 24 according to the embodiments of the present application may be processed using a solid plate-like insulating material.

For example, as shown in FIGS. 4 to 11, a through hole may be provided in the solid insulating material, and the through hole run through the entire insulating material from the first surface 243 to the second surface 244, so that the solid insulating material may be made into a hollow structure, and a second wall 241 and a third wall 242 may be formed opposite each other, and further a first through hole 2411 may be provided in the second wall 241 and a second through hole 2421 may be provided in the third wall 242. Meanwhile, the running through hole forms a third through hole 2431 on the first surface 243 and a fourth through hole 2441 on the second surface 244.

For another example, a deep groove may be provided in the solid insulating material, the groove extending from the first surface 243 to the second surface 244 but not running through the second surface 244, likewise making the solid insulating material a hollow structure, and the side walls of the groove include a second wall 241 and a third wall 242 which are oppositely provided, whereby a first through hole 2411 may be provided in the second wall 241 and a second through hole 2421 may be provided in the third wall 242. In addition, the opening of the groove forms a third through hole 2431 on the first surface 243, and the bottom wall of the groove may be used to form a wall of the insulating structure 24, at which time the fourth through hole 2441 is not provided on the second surface 244 of the insulating structure 24.

It should be understood that in the above two embodiments, the size of the third through hole 2431 of the first surface 243 is related to the size of the hollow portion of the insulating structure 24. For example, if a diameter of the groove or through hole extending from the first surface 243 to the second surface 244 is a fixed value, the size of the third through hole 2431 is equal to the diameter of the groove or through hole. For another example, if the diameter of the groove or through hole extending from the first surface 243 to the second surface 244 is not a fixed value, for example, the diameter of the groove or through hole gradually increases from the first surface 243 to the second surface 244, the size of the third through hole 2431 is equal to a minimum value of the diameter of the groove or through hole, but the embodiments of the present application are not limited thereto.

In some embodiments, different from the above two embodiments, the insulating structure 24 according to the embodiments of the present application may further include a fourth wall opposite to the first wall 213, the outer surface of the fourth wall is the first surface 2431, then a through hole running through the fourth wall may be provided on the fourth wall as a third through hole 2431. Similarly, the insulating structure 24 may also include a fifth wall disposed opposite the fourth wall, the fifth wall is located away from the first wall 213, the outer surface of the fifth wall is the second surface 244, then the through hole running through the fifth wall may be provided on the fifth wall as the fourth through hole, but the embodiments of the present application are not limited thereto.

It should be understood that the number, position, shape and size of the first through holes 2411 provided on the second wall 241 according to the embodiments of the present application can be flexibly set according to the practical application. The number, position, shape and size of the second through holes 2421 provided in the third wall 242 can also be flexibly set according to the practical application. Also, for the first through hole 2411 provided on the second wall 241 and the second through hole 2421 provided on the third wall 242, and the number, position, shape and size of the first through hole may be the same to or different from those of the second through hole, and the embodiments of the present application are not limited thereto.

In some embodiments, as shown in FIGS. 4-11, the second wall 241 is provided with a plurality of first through holes 2411 and/or the third wall 242 is provided with a plurality of second through holes 2421. A plurality of first through holes 2411 are arranged at different positions on the second wall 241, so that the electrolyte inside the insulating structure 24 flows to the first electrode assembly 221 respectively through the different first through holes 2411 at different positions, and then infiltrates the first electrode assembly 221 from a plurality of positions, so that the infiltration speed can be accelerated and the infiltration effect can be improved, and the first electrode assembly 221 can be uniformly infiltrated as much as possible. Similarly, a plurality of second through holes 2421 are arranged at different positions on the third wall 242, so that the electrolyte inside the insulating structure 24 flows to the second electrode assembly 222 respectively through the different second through holes 2421 at different positions, and then the second electrode assembly 222 is infiltrated from the plurality of positions, which not only accelerates the infiltration speed, but also improves the infiltration effect, and infiltrates the second electrode assembly 222 as uniformly as possible.

In some embodiments, as shown in FIGS. 4-11, the number of first through holes 2411 provided in the second wall 241 is equal to the number of second through holes 2421 provided in the third wall 242, and the position of the first through holes 2411 provided in the second wall 241 corresponds to the position of the second through holes 2421 provided in the third wall 242. An equal number of the first through hole 2411 and the second through hole 2421 are provided on the second wall 241 and the third wall 242 in corresponding positions, respectively, which can not only improve the machining efficiency, but also improve the uniformity of infiltration. Specifically, at the time of machining, the first through hole 2411 on the second wall 241 and the second through hole 2421 on the third wall 242 can be obtained by arranging through holes running through both the second wall 241 and the third wall 242, so as to improve machining efficiency. In the infiltration, since the first through hole 2411 and the second through hole 2421 are equal in number and correspond in position, the position on the first electrode assembly 221 to which the electrolyte inside the insulating structure 24 flows is exactly corresponding to that on the second electrode assembly 222, which makes the infiltration effects on the first electrode assembly 221 and the second electrode assembly 222 are basically consistent, and the infiltration efficiency can be improved.

In some embodiments, as shown in FIGS. 4-11, the first through hole 2411 may be distributed on the second wall 241 based on a set of rules, and similarly, the second through hole 2421 may also be distributed on the third wall 242 based on the rules, which may improve both machining efficiency and infiltrating uniformity.

For example, as shown in FIGS. 4 to 11, the second wall 241 is provided with a plurality of rows of first through holes 2411 arranged in a second direction Y, the first through holes 2411 in each of the plurality of rows of first through holes 2411 include a plurality of first through holes 2411 arranged in a third direction Z, the first direction X, the second direction Y and the third direction Z are pairwise perpendicular. That is, the first through holes 2411 may be distributed in a matrix manner on the second wall 241. Further, the spacing between the plurality of rows of first through holes 2411 may be equal, and the spacing between the first through holes 2411 of the same row may also be equal, so that the first through holes 2411 are uniformly distributed in the second direction Y and in the third direction Z on the second wall 241, so as to ensure that the electrolyte enters different areas of the first end face 2211 of the first electrode assembly 221 as much as possible, and improve the infiltrating uniformity of the first electrode assembly 221.

Similar to the second wall 241, the second through holes 2421 may also be distributed in a matrix manner on the third wall 242. As shown in FIGS. 4 to 11, the third wall 242 is provided with a plurality of rows of second through holes 2421 arranged in the second direction Y, the second through holes 2421 in each of the plurality of rows of second through holes 2421 include a plurality of second through holes 2421 arranged in the third direction Z, the first direction X, the second direction Y and the third direction Z are pairwise perpendicular. Further, the spacing between the plurality of rows of second through holes 2421 may be equal, and the spacing between the second through holes 2421 of the same row may also be equal, so that the second through holes 2421 are uniformly distributed in the second direction Y and in the third direction Z on the third wall 242, so as to ensure that the electrolyte enters different areas of the second end face 2221 of the second electrode assembly 222 as much as possible, and improve the infiltrating uniformity of the second electrode assembly 222.

It should be understood that the liquid injection hole 2131 corresponding to the third through hole 2431 is taken as an example, but other components may be provided on the first wall 213 to facilitate centralized machining and improve machining efficiency. For example, FIG. 12 shows another possible schematic diagram of the battery cell 20 according to the embodiments of the present application, as shown in FIG. 12, the first wall 213 is provided with a pressure relief mechanism 2133, and the pressure relief mechanism 2133 is used to actuate to relieve pressure inside the battery cell when the pressure or temperature inside the battery cell reaches a threshold value.

It should be understood that this threshold value can be adjusted according to different design requirements. The predetermined threshold value may be set depending on the material of one or more of the positive electrode plate, the negative electrode plate, the electrolyte and the separation film in the battery cell 20. The pressure relief mechanism 2133 may be integrally formed with the first wall 213, for example, the pressure relief mechanism 2133 may be a notch on the first wall 213. Alternatively, the pressure relief mechanism 2133 may also employ such a pressure-sensitive or temperature-sensitive element or component, that is, when the internal pressure or temperature of the battery cell 20 reaches a predetermined threshold value, the pressure relief mechanism 2133 is actuated, thereby forming a channel for internal pressure or temperature relief.

In this application, "actuation" means that the pressure relief mechanism 2133 operates so that the internal pressure and temperature of the battery cell 20 are relieved. Operations of the pressure relief mechanism 2133 may include but are not limited to at least a portion of the pressure relief mechanism 2133 being broken, torn or melted and the like. After the pressure relief mechanism 2133 is actuated, the high-temperature and high-pressure substances inside the battery cell 20 are discharged outward from the pressure relief mechanism 2133 as emissions. In this way, the battery cell 20 can be depressurized under a controllable pressure or temperature, thereby avoiding potentially more serious accidents.

Emissions from battery cells 20 mentioned in the present application include, but are not limited to, electrolytes, dissolved or split positive and negative plates, fragments of separators, high-temperature and high-pressure gases generated by reactions, flames, and the like.

The pressure relief mechanism 2133 on the battery cell 20 has an important influence on the safety of the battery 10. For example, when a phenomenon such as short circuit, overcharge or the like occurs in the battery cell 20, thermal runaway may occur inside the battery cell 20, and pressure or temperature may rise abruptly. In this case, the internal pressure and temperature can be released outward by actuation of the pressure relief mechanism 2133, so as to prevent the battery cell 20 from exploding and catching fire.

It should be understood that the pressure relief mechanism 2133 and the liquid injection hole 2131 of embodiments of the present application may be located on the same wall or on different walls. When both of them are located on the same wall, as shown in FIG. 12, that is, when the first wall 213 is provided with the pressure relief mechanism 2133 and the liquid injection hole 2131, the pressure relief mechanism 2133 is generally provided at middle of the first wall 213, so as to be damaged in time and effectively, thereby relieving the internal pressure and temperature to ensure the safety of the battery cell 20. Therefore, in order to avoid the pressure relief mechanism 2133, or to avoid other components located on the first wall 213, the placement position of the liquid injection hole 2131 on the first wall 213 is very limited, and may not be located at the optimum liquid injection position. For example, as shown in FIG. 12, the liquid injection hole 2131 is usually provided only at an edge position deviating from an intermediate position in order to avoid the pressure relief mechanism 2133, so that the electrode liquid entering the inside of the battery cell 20 through the liquid injection hole 2131 cannot directly enter the third through hole 2431 located at the intermediate position. Therefore, the battery cell 20 according to the embodiments of the present application may also include a flow guide 23 to solve this problem.

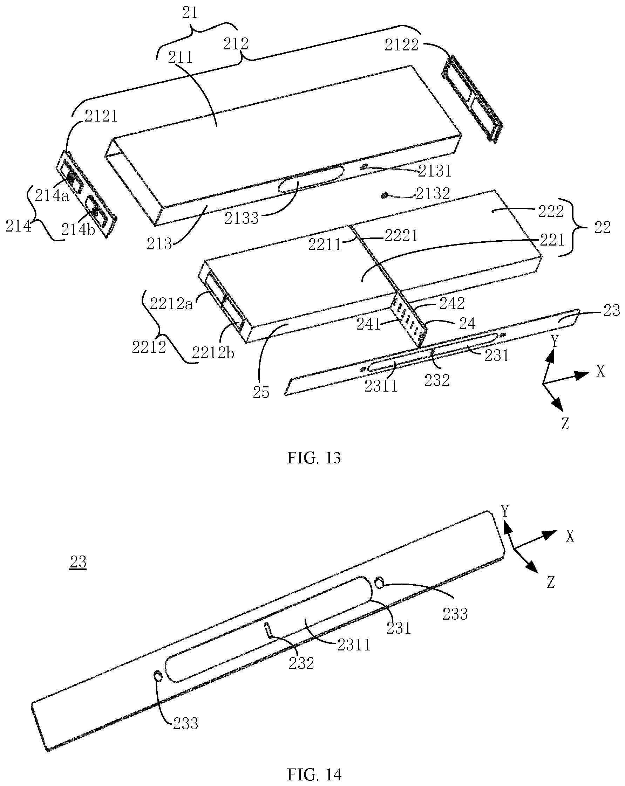

FIG. 13 shows another exploded schematic diagram of the battery cell 20 according to the embodiments of the present application, FIG. 13 may be an exploded schematic diagram of the battery cell shown in FIG. 12. As shown in FIG. 13, unlike that in FIG. 4, the battery cell 20 shown in FIG. 13 further includes a flow guide 23. In particular, the flow guide 23 is arranged between the end faces of the first electrode assembly 221 and the second electrode assembly 222 facing the first wall 213 and the first wall 213, the flow guide 23 is provided with a liquid accumulation tank 231, an opening of the liquid accumulation tank 231 faces the first wall 213, a bottom wall 2311 of the liquid accumulation tank 231 is provided with a fifth through hole 232, the fifth through hole 232 corresponds to the third through hole 2431, the liquid accumulation tank 231 is configured to collect the electrolyte injected through the liquid injection hole 2131, and the electrolyte in the liquid accumulation tank 231 passes through the fifth through hole 232 and the third through hole 2431 in turn to flow into the interior of the insulating structure 24.

In the battery cell 20 according to the embodiments of the present application, the electrolyte injected into the battery cell from the liquid injection hole 2131 is collected by the liquid accumulation tank 231 of the flow guide 23, and then flows to an insulating structure 24 between electrode assemblies 22 through a fifth through hole 232 in the liquid accumulation tank 231. In this way, although the liquid injection hole 2131 is only located at a specific position on the first wall 213, the design of the liquid accumulation tank 231 and the fifth through hole 232 can achieve the redistribution of the injection position of the electrolyte. That is, without limiting the position of the liquid injection hole 2131, the electrolyte can flow directionally by reasonably position settings of the liquid accumulation tank 231 and the fifth through hole 232, and the electrolyte can flow to the third through hole 2431 from the fifth through hole 232, and then enter the insulating structure 24, so that a better infiltration effect can be achieved for the electrode assembly 22, which improves the infiltration efficiency, and also improves the machining efficiency and electrochemical performance of the battery cell 20.

The flow guide 23 plays an insulating role in the battery cell 20, to ensure electrical insulation between the electrode assembly 22 and the housing 21.

In the embodiments of the present application, the battery cell 20 further includes an insulating member 25, the insulating member 25 is disposed on an outer surface of the electrode assembly 22, and the insulating member 25 is used for isolating the electrode assembly 22 from the housing 21. For example, the insulating member 25 is disposed on each of the outer surfaces of the first electrode assembly 221 and the second electrode assembly 222, and the insulating member 25 is used for isolating the first electrode assembly 221 from the housing 21 and/or for isolating the second electrode assembly 222 from the housing 21. Specifically, as shown in FIG. 13, for any one of the electrode assemblies 22 in the battery cell 20, the insulating member 25 may be provided on all or part of the outer surface of the electrode assembly 22, and the insulating member 25 may be used to isolate the electrode assembly 22 from the housing 21. Moreover, the plurality of electrode assemblies 22 may share the same insulating member or use different insulating members 25, and the embodiments of the present application are not limited thereto. The flow guide 23 and the insulating member 25 can be bonded and fixed by adhesive to achieve relative fixation between the flow guide 23 and the electrode assembly 22, which enables the fifth through hole 232 to correspond to the optimum liquid injection position of the electrode assembly 22, for example, the fifth through hole 232 corresponds to the third through hole 2431 of the insulating structure 24 between the two electrode assemblies 22, so that the fixed flow guide 23 and the electrode assembly 22 are jointly arranged in the housing 21, which can avoid the dislocation between the flow guide 23 and the electrode assembly 22 during the installation in the housing 21, thereby avoiding the situation that the fifth through hole 232 cannot correspond to the optimum liquid injection position of the electrode assembly 22.

In the embodiments of the present application, as shown in FIG. 13, the orthographic projection of the liquid injection hole 2131 facing the flow guide 23 is located on the bottom wall 2311 of the liquid accumulation tank 231. When the electrolyte is injected into the battery cell 20 through the liquid injection hole 2131, the electrolyte flows to the liquid accumulation tank 231 of the flow guide 23 under the action of gravity. In order to ensure that the injected electrolyte can be completely collected the liquid accumulation tank 231 as much as possible, the liquid injection hole 2131 can be arranged corresponding to the bottom wall 2311 of the liquid accumulation tank 231 to avoid the electrolyte flowing to other directions as much as possible.

It should be understood that as shown in FIG. 13, the orthographic projection of the fifth through hole 232 facing the first surface 243 is located within the region of the third through hole 2431. Specifically, according to the above description, if the electrolyte can enter the interior of the insulating structure 24 through the third through hole 2431, the infiltration effect is preferable, but the liquid injection hole 2131 may not satisfy this position requirement. Therefore, with the arrangement of the flow guide 23, the electrolyte flows to an interior of the battery cell 20 through the liquid injection hole 2131, the electrolyte is collected by the liquid accumulation tank 231, and the flow direction of the electrolyte is adjusted again through the fifth through hole 232, so that the electrolyte can flow to the third through hole 2431 through the fifth through hole 232 under the action of gravity, and then enters the interior of the insulating structure 24 through the third through hole 2431, so as to prevent the electrolyte flowing out of the fifth through hole 232 from splashing to other positions in the battery cell 20 and affecting the infiltration efficiency of the electrolyte when the fifth through hole 232 deviates from the third through hole 2431.

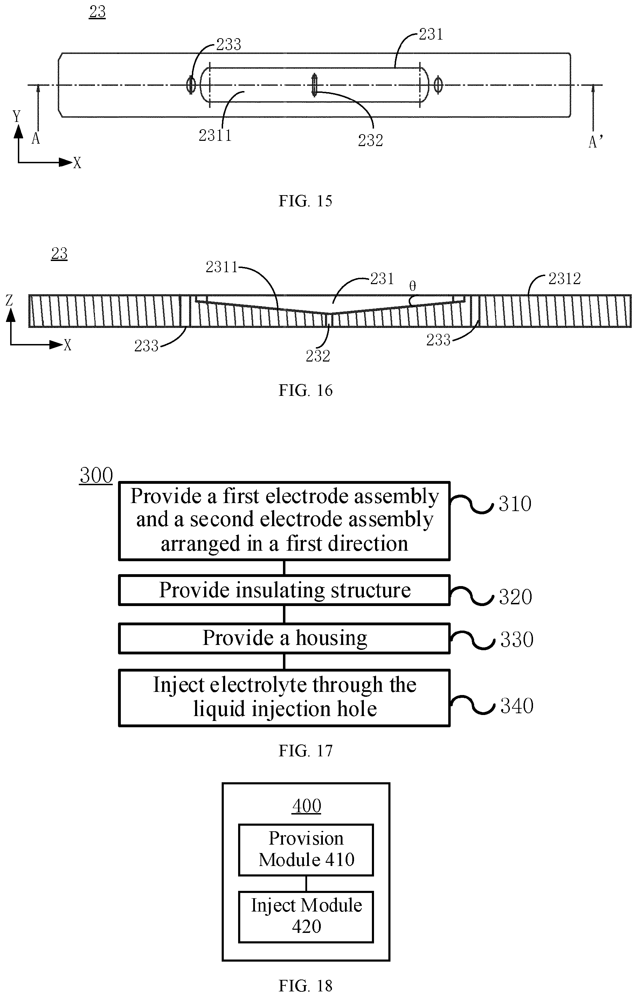

The flow guide 23 according to the embodiments of the present application will be described in detail below with reference to the accompanying drawings. FIG. 14 shows a schematic structural diagram of the flow guide 23 according to the embodiments of the present application. FIG. 15 shows a top view of the flow guide 23 according to the embodiments of the present application. FIG. 16 shows a cross-sectional view of the flow guide 23 according to the embodiments of the present application, where the cross-sectional view may be taken in a direction A-A' in FIG. 15, i.e., the cross-sectional view is perpendicular to the second direction Y, perpendicular to the flow guide 23 and parallel to the first direction X.

It should be understood that the area and shape of the liquid accumulation tank 231 of the flow guide 23 according to the embodiments of the present application can be set according to the practical application. For example, as shown in FIGS. 14 to 16, the shape of the liquid accumulation tank 231 may be set to be oval, so as to facilitate machining. As shown in FIGS. 14 to 16, the area of the liquid accumulation tank 231 according to the embodiments of the present application may be set according to the position of the liquid injection hole 2131, the position of the electrode assembly 22, the liquid injection speed and the like. For example, the liquid accumulation tank 231 should cover the corresponding position of the liquid injection hole 2131 to ensure the collection of electrolyte injected through the liquid injection hole 2131. For another example, the liquid accumulation tank 231 should also cover the desired optimal liquid injection position of the electrode assembly 22 such that the fifth through hole 232 corresponds to the optimal position. For another example, if the liquid injection speed is fast, the area of the liquid accumulation tank 231 should be set to be large, so as to prevent the electrolyte from overflowing the liquid accumulation tank 231 and reduce the infiltration efficiency.

In some embodiments, as shown in FIGS. 14-16, the bottom wall 2311 of the liquid accumulation tank 231 is inclined with respect to the first plane 2312, and the first plane 2312 is perpendicular to the axis of the liquid injection hole 2131, to converge the electrolyte within the liquid accumulation tank 231 toward the fifth through hole 232. The first plane 2312 is perpendicular to the third direction Z and parallel to the first direction X, the third direction Z is the thickness direction of the flow guide 23, and the third direction Z is perpendicular to the first direction X. The bottom wall 2311 of the liquid accumulation tank 231 is arranged to be inclined, so that the electrolyte in the liquid accumulation tank 231 converges towards the fifth through hole 232, so that on the one hand, the speed of the electrolyte flowing to the electrode assembly 22 can be accelerated, on the other hand, the accumulation of the electrolyte in other positions in the liquid accumulation tank 231 except the fifth through hole 232 can be avoided, and waste caused by residual electrolyte in the liquid accumulation tank 231 can be avoided.

It should be understood that the angle θ at which the bottom wall 2311 of the liquid accumulation tank 231 of the embodiments of the present application is inclined with respect to the first plane 2312 may be set according to the practical application. In some embodiments, the angle θ at which the bottom wall 2311 of the liquid accumulation tank 231 is inclined with respect to the first plane 2312 is greater than 0° and less than 1°. For example, the inclination angle θ can be set according to the thickness of the flow guide 23. If the thickness of the flow guide 23 is large, the inclination angle θ can be set to be large, for example, when the thickness of the flow guide 23 is about 1 mm, the inclination angle θ can be greater than or equal to 5°. On the contrary, if the thickness of the flow guide 23 is small, the inclination angle θ is also small. For example, when the thickness of the flow guide 23 is about 0.5 mm, the inclination angle θ can be set to about 0.25°. Considering the limited internal space of the battery cell 20, in order to improve the energy density of the battery cell 20, the thickness of the flow guide 23 is usually small, hence the inclination angle θ is usually set to be less than or equal to 0.25° to save the space occupied by the flow guide 23.

Therefore, when the battery cell 20 according to the embodiments of the present application is injected with liquid, the electrolyte is first collected by the liquid accumulation tank 231, and then flows to a position between the first electrode assembly 221 and the second electrode assembly 222 through the fifth through hole 232, to flow into the battery cell 20 through the liquid injection hole 2131. Since a hollow insulating structure 24 is provided between the first electrode assembly 221 and the second electrode assembly 222, and the third through hole 2431 is provided on the first surface 243 of insulating structure 24 facing the first wall 213, the electrolyte flowing out of the fifth through hole 232 can flow into the hollow insulating structure 24 through the third through hole 2431. Thus, the electrolyte inside the insulating structure 24 can further flow to the first electrode assembly 221 through the first through hole 2411, and the part of the electrolyte infiltrates the first electrode assembly 221 through the first end face 2211 of the first electrode assembly 221. In addition, the electrolyte in the insulating structure 24 can further flow to the second electrode assembly 222 through the second through hole 2421, and this part of the electrolyte can infiltrate the second electrode assembly 222 through the second end face 2221 of the second electrode assembly 222, thereby achieving the effect of uniformly and rapidly infiltrating the two electrode assemblies 22, thus improving the infiltration efficiency and infiltration effect of the battery cell 20, and also improving the machining efficiency and electrochemical performance of the battery cell 20.

The battery cell, the battery, and the electrical device according to the embodiments of the present application have been described above, and methods and devices for manufacturing the battery cell according to embodiments of the present application will be described below, where portions not described in detail can be referred to the preceding embodiments.

FIG. 17 shows a schematic flowchart of a method 300 of manufacturing the battery cell 20 according to an embodiment of the present application. As shown in FIG. 17, the method 300 may include: S310, providing a first electrode assembly 221 and a second electrode assembly 222 arranged in a first direction; S320, providing an insulating structure 24, where the insulating structure 24 is disposed between the first electrode assembly 221 and the second electrode assembly 222, the insulating structure 24 includes a second wall 241 and a third wall 242, the second wall 241 is opposite to a first end face 2211 of the first electrode assembly 221, the third wall 242 is opposite to a second end face 2221 of the second electrode assembly 222, the second wall 241 is provided with a first through hole 2411, the third wall 242 is provided with a second through hole 2421; S330, providing a housing 21, where the housing 21 is provided with a receiving cavity, the receiving cavity is configured to receive the insulating structure 24, the first electrode assembly 221 and the second electrode assembly 222, the housing 21 has a first wall 213, the first wall 213 is provided with a liquid injection hole 2131, and a first surface 243 of the insulating structure 24 facing the first wall 213 has a third through hole 2431; and S340, injecting electrolyte through the injection hole 2131, where the electrolyte flows into the insulating structure 24 through the third through hole 2431, the electrolyte in the interior of the insulating structure 24 flows to the first electrode assembly 221 through the first through hole 2411, and flows to the second electrode assembly 222 through the second through hole 2421.

FIG. 18 shows a schematic block diagram of a device 400 for manufacturing the battery cell 20 according to an embodiment of the present application. As shown in FIG. 18, the device 400 may include a provision module 410 and an injection module 420. In particular, the provision module 410 is used for providing a first electrode assembly 221 and a second electrode assembly 222 arranged in a first direction; providing an insulating structure 24, where the insulating structure 24 is disposed between the first electrode assembly 221 and the second electrode assembly 222, the insulating structure 24 includes a second wall 241 and a third wall 242, the second wall 241 is opposite to a first end face 2211 of the first electrode assembly 221, the third wall 242 is opposite to a second end face 2221 of the second electrode assembly 222, the second wall 241 is provided with a first through hole 2411, the third wall 242 is provided with a second through hole 2421; and providing a housing 21, where the housing 21 is provided with a receiving cavity, the receiving cavity is configured to receive the insulating structure 24, the first electrode assembly 221 and the second electrode assembly 222, the housing 21 has a first wall 213, the first wall 213 is provided with a liquid injection hole 2131, and a first surface 243 of the insulating structure 24 facing the first wall 213 has a third through hole 2431. The injection module 420 is used for injecting electrolyte through the injection hole 2131, where the electrolyte flows into the insulating structure 24 through the third through hole 2431, the electrolyte in the interior of the insulating structure 24 flows to the first electrode assembly 221 through the first through hole 2411, and flows to the second electrode assembly 222 through the second through hole 2421.

Although the present application has been described with reference to preferred embodiments, various modifications may be made thereto and components therein may be replaced with equivalents without departing from the scope of the present application. Most of all, on the premise of no structural conflict, the technical features mentioned in the embodiments can be combined in any way. The present application is not restricted to particular embodiments disclosed herein but includes all technical solutions falling in the scope of the claims.

## Claims

1. A battery cell, comprising:
a housing (21) provided with a receiving cavity, the housing (21) having a first wall (213), and the first wall (213) being provided with a liquid injection hole (2131);
a first electrode assembly (221) and a second electrode assembly (222) arranged in a first direction, the first electrode assembly (221) and the second electrode assembly (222) being received in the receiving cavity;
an insulating structure (24), the insulating structure (24) being disposed between the first electrode assembly (221) and the second electrode assembly (222), the insulating structure (24) comprising a second wall (241) and third wall (242), wherein the second wall (241) is opposite to a first end face (2211) of the first electrode assembly (221), the third wall (242) is opposite to a second end face (2221) of the second electrode assembly (222), the second wall (241) is provided with a first through hole (2411), the third wall (242) is provided with a second through hole (2421), a first surface (243) of the insulating structure (24) facing the first wall (213) is provided a third through hole (2431), and the third through hole (2431) is configured to introduce electrolyte injected through the liquid injection hole (2131) into an interior of the insulating structure (24) so that the electrolyte in the interior of the insulating structure (24) flows to the first electrode assembly (221) through the first through hole (2411) and to the second electrode assembly (222) through the second through hole (2421);
wherein the first wall (213) is provided with a pressure relief mechanism (2133), the pressure relief mechanism (2133) is configured to actuate to relieve pressure inside the battery cell when the pressure or temperature inside the battery cell reaches a threshold value; and
a flow guide (23) arranged between the end faces of the first electrode assembly (221) and the second electrode assembly (222) facing the first wall (213) and the first wall (213), wherein the flow guide (23) is provided with a liquid accumulation tank (231), an opening of the liquid accumulation tank (231) faces the first wall (213), a bottom wall (2311) of the liquid accumulation tank (231) is provided with a fifth through hole (232), the fifth through hole (232) corresponds to the third through hole (2431), the liquid accumulation tank (231) is configured to collect the electrolyte injected through the liquid injection hole (2131), and the electrolyte in the liquid accumulation tank (231) passes through the fifth through hole (232) and the third through hole (2431) in turn to flow into the interior of the insulating structure (24).

2. The battery cell according to claim 1, wherein the insulating structure (24) further comprises a second surface (244), the second surface (244) is located away from the first wall (213) and opposite the first surface (243), the second surface (244) is provided with a fourth through hole, and the fourth through hole is configured to allow the electrolyte in the interior of the insulating structure (24) to flow to the first electrode assembly (221) and the second electrode assembly (222) through the fourth through hole.

3. The battery cell according to claim 1 or 2, wherein the second wall (241) is provided with a plurality of the first through holes (2411), and/or the third wall (242) is provided with a plurality of the second through holes (2421).

4. The battery cell according to claim 3, wherein a number of the first through holes (2411) provided in the second wall (241) is equal to a number of the second through holes (2421) provided in the third wall (242), and positions of the first through holes (2411) provided in the second wall (241) correspond to positions of the second through holes (2421) provided in the third wall (242).

5. The battery cell according to claim 3 or 4, wherein the second wall (241) is provided with a plurality of rows of first through holes (2411) arranged in a second direction, the first through holes (2411) in each of the plurality of rows of first through holes (2411) comprise a plurality of first through holes (2411) arranged in a third direction, the first direction, the second direction and the third direction are pairwise perpendicular; and/or,
the third wall (242) is provided with a plurality of rows of second through holes (2421) arranged in the second direction, the second through holes (2421) in each of the plurality of rows of second through holes (2421) comprise a plurality of second through holes (2421) arranged in the third direction, the first direction, the second direction and the third direction are pairwise perpendicular.

6. The battery cell according to any one of claims 1 to 5, wherein the first electrode assembly (221) comprises a first electrode plate and a second electrode plate, the first electrode plate and the second electrode plate are provided wound around a winding axis, the winding axis is parallel to the first direction, the first end face (2211) is perpendicular to the winding axis, or,
the first electrode assembly (221) comprises a plurality of first electrode plates and a plurality of second electrode plates, the plurality of first electrode plates and the plurality of second electrode plates are alternately stacked in the second direction, the second direction is perpendicular to the first direction, the first end face (2211) is perpendicular to the first direction, or,
the first electrode assembly (221) comprises a first electrode plate and a plurality of second electrode plates, the first electrode plate comprises a plurality of stacking sections and a plurality of bending sections, the plurality of bending sections are configured to connect two adjacent stacking sections, the plurality of second electrode plates and the plurality of stacking sections are alternately stacked in the second direction, the second direction is perpendicular to the first direction, and the first end face (2211) is perpendicular to the first direction; and,
wherein preferably, the battery cell is a cuboid, and the first direction is a length direction of the battery cell.

7. The battery cell according to any one of claims 1 to 6, wherein an orthographic projection of the liquid injection hole (2131) facing the flow guide (23) is located on the bottom wall (2311) of the liquid accumulation tank (231);
and/or
wherein an orthographic projection of the fifth through hole (232) facing the first surface (243) is located within a region of the third through hole (2431),
and/or
wherein the bottom wall (2311) of the liquid accumulation tank (231) is inclined with respect to a first plane (2312) for converging the electrolyte in the interior of the liquid accumulation tank (231) toward the fifth through hole (232), the first plane (2312) is perpendicular to an axis of the liquid injection hole (2131).

8. The battery cell according to claim 7, wherein the bottom wall (2311) of the liquid accumulation tank (231) is inclined at an angle greater than 0° and less than 1° with respect to the first plane (2312).

9. The battery cell according to any one of claims 7 to 8, wherein the battery cell further comprises:
an insulating member (25), wherein the insulating member (25) is arranged on outer surfaces of the first electrode assembly (221) and the second electrode assembly (222), the insulating member (25) is configured to isolate the first electrode assembly (221) from the housing (21) and/or for isolating the second electrode assembly (222) from the housing (21), and the flow guide (23) is fixed to the insulating member (25).

10. The battery cell according to any one of claims 1 to 9, wherein the orthographic projection of the liquid injection hole (2131) facing the first surface (243) is located in a region of the third through hole (2431);
and/or
wherein the housing (21) comprises:
a casing (211), wherein the casing (211) is a hollow structure with openings at two ends, the two ends are opposite two ends of the casing (211), and the first wall (213) is any one of walls of the casing (211); and
two cover plates (212), wherein the two cover plates (212) are configured to cover the openings at two ends of the casing (211).

11. The battery cell according to claim 10, wherein the first electrode assembly (221) is disposed insulated from the second electrode assembly (222), a positive electrode terminal and a negative electrode terminal are disposed on each of the two cover plates (212), and the positive electrode terminal and the negative electrode terminal on each of the two cover plates are electrically connected to an electrode assembly adjacent thereto for deriving electrical energy from the electrode assembly.

12. The battery cell according to any one of claims 1 to 11,
wherein the battery cell comprises:
a first electrode assembly group and a second electrode assembly group arranged in the first direction, wherein the first electrode assembly group comprises a plurality of the first electrode assemblies (221) arranged in the second direction, the second electrode assembly group comprises a plurality of the second electrode assemblies (222) arranged in the second direction, and an identical insulating structure (24) is sandwiched between the first electrode assembly group and the second electrode assembly group.

13. A battery, comprising:
the battery cell according to any one of claims 1 to 12.

14. An electrical device, comprising:
the battery cell according to any one of claims 1 to 12, wherein the battery cell is configured to supply electrical energy to the electrical device.

## Patentansprüche

1. Batteriezelle, umfassend:
ein Gehäuse (21), das mit einem Aufnahmehohlraum versehen ist, wobei das Gehäuse (21) eine erste Wand (213) aufweist und die erste Wand (213) mit einem Flüssigkeitseinspritzloch (2131) versehen ist;
eine erste Elektrodenanordnung (221) und eine zweite Elektrodenanordnung (222), die in einer ersten Richtung angeordnet sind, wobei die erste Elektrodenanordnung (221) und die zweite Elektrodenanordnung (222) in dem Aufnahmehohlraum aufgenommen sind;
eine Isolierstruktur (24), wobei die Isolierstruktur (24) zwischen der ersten Elektrodenanordnung (221) und der zweiten Elektrodenanordnung (222) angeordnet ist, wobei die Isolierstruktur (24) eine zweite Wand (241) und eine dritte Wand (242) umfasst, wobei die zweite Wand (241) einer ersten Endfläche (2211) der ersten Elektrodenanordnung (221) gegenüberliegt, wobei die dritte Wand (242) einer zweiten Endfläche (2221) der zweiten Elektrodenanordnung (222) gegenüberliegt, wobei die zweite Wand (241) mit einem ersten Durchgangsloch (2411) versehen ist, wobei die dritte Wand (242) mit einem zweiten Durchgangsloch (2421) versehen ist, wobei eine der ersten Wand (213) zugewandte erste Oberfläche (243) der Isolierstruktur (24) mit einem dritten Durchgangsloch (2431) versehen ist und das dritte Durchgangsloch (2431) dazu ausgelegt ist, einen durch das Flüssigkeitseinspritzloch (2131) eingespritzten Elektrolyten in ein Inneres der Isolierstruktur (24) einzubringen, so dass der Elektrolyt im Inneren der Isolierstruktur (24) durch das erste Durchgangsloch (2411) zu der ersten Elektrodenanordnung (221) fließt und durch das zweite Durchgangsloch (2421) zu der zweiten Elektrodenanordnung (222) fließt;
wobei die erste Wand (213) mit einem Druckentlastungsmechanismus (2133) versehen ist, wobei der Druckentlastungsmechanismus (2133) dazu ausgelegt ist, betätigt zu werden, um einen Druck innerhalb der Batteriezelle zu entlasten, wenn der Druck oder eine Temperatur innerhalb der Batteriezelle einen Schwellenwert erreicht; und
eine Strömungsführung (23), die zwischen den der ersten Wand (213) zugewandten Endflächen der ersten Elektrodenanordnung (221) und der zweiten Elektrodenanordnung (222) und der ersten Wand (213) angeordnet ist, wobei die Strömungsführung (23) mit einem Flüssigkeitsspeichertank (231) versehen ist, wobei eine Öffnung des Flüssigkeitsspeichertanks (231) der ersten Wand (213) zugewandt ist, wobei eine untere Wand (2311) des Flüssigkeitsspeichertanks (231) mit einem fünften Durchgangsloch (232) versehen ist, wobei das fünfte Durchgangsloch (232) dem dritten Durchgangsloch (2431) entspricht, wobei der Flüssigkeitsspeichertank (231) dazu ausgelegt ist, den durch das Flüssigkeitseinspritzloch (2131) eingespritzten Elektrolyten aufzufangen, und der Elektrolyt in dem Flüssigkeitsspeichertank (231) nacheinander durch das fünfte Durchgangsloch (232) und das dritte Durchgangsloch (2431) strömt, um in das Innere der Isolierstruktur (24) zu fließen.

2. Batteriezelle nach Anspruch 1, wobei die Isolierstruktur (24) ferner eine zweite Oberfläche (244) umfasst, wobei sich die zweite Oberfläche (244) entfernt von der ersten Wand (213) und gegenüber der ersten Oberfläche (243) befindet, wobei die zweite Oberfläche (244) mit einem vierten Durchgangsloch versehen ist und das vierte Durchgangsloch dazu ausgelegt ist, zu ermöglichen, dass der Elektrolyt in das Innere der Isolierstruktur (24) gelangt, um durch das vierte Durchgangsloch zu der ersten Elektrodenanordnung (221) und der zweiten Elektrodenanordnung (222) zu fließen.

3. Batteriezelle nach Anspruch 1 oder 2, wobei die zweite Wand (241) mit einer Mehrzahl der ersten Durchgangslöcher (2411) versehen ist und/oder die dritte Wand (242) mit einer Mehrzahl der zweiten Durchgangslöcher (2421) versehen ist.

4. Batteriezelle nach Anspruch 3, wobei eine Anzahl der in der zweiten Wand (241) bereitgestellten ersten Durchgangslöcher (2411) gleich einer Anzahl der in der dritten Wand (242) bereitgestellten zweiten Durchgangslöcher (2421) ist und Positionen der in der zweiten Wand (241) bereitgestellten ersten Durchgangslöcher (2411) Positionen der in der dritten Wand (242) bereitgestellten zweiten Durchgangslöcher (2421) entsprechen.

5. Batteriezelle nach Anspruch 3 oder 4, wobei die zweite Wand (241) mit einer Mehrzahl von Reihen von ersten Durchgangslöchern (2411) versehen ist, die in einer zweiten Richtung angeordnet sind, wobei die ersten Durchgangslöcher (2411) in jeder der Mehrzahl von Reihen von ersten Durchgangslöchern (2411) eine Mehrzahl von ersten Durchgangslöchern (2411) umfassen, die in einer dritten Richtung angeordnet sind, wobei die erste Richtung, die zweite Richtung und die dritte Richtung paarweise senkrecht stehen; und/oder
wobei die dritte Wand (242) mit einer Mehrzahl von Reihen von zweiten Durchgangslöchern (2421) versehen ist, die in der zweiten Richtung angeordnet sind, wobei die zweiten Durchgangslöcher (2421) in jeder der Mehrzahl von Reihen von zweiten Durchgangslöchern (2421) eine Mehrzahl von zweiten Durchgangslöchern (2421) umfassen, die in der dritten Richtung angeordnet sind, wobei die erste Richtung, die zweite Richtung und die dritte Richtung paarweise senkrecht stehen.

6. Batteriezelle nach einem der Ansprüche 1 bis 5, wobei die erste Elektrodenanordnung (221) eine erste Elektrodenplatte und eine zweite Elektrodenplatte umfasst, wobei die erste Elektrodenplatte und die zweite Elektrodenplatte um eine Wicklungsachse gewickelt bereitgestellt sind, wobei die Wicklungsachse parallel zur ersten Richtung ist, wobei die erste Endfläche (2211) senkrecht zur Wicklungsachse steht, oder
wobei die erste Elektrodenanordnung (221) eine Mehrzahl von ersten Elektrodenplatten und eine Mehrzahl von zweiten Elektrodenplatten umfasst, wobei die Mehrzahl von ersten Elektrodenplatten und die Mehrzahl von zweiten Elektrodenplatten abwechselnd in der zweiten Richtung gestapelt sind, wobei die zweite Richtung senkrecht zur ersten Richtung steht, wobei die erste Endfläche (2211) senkrecht zur ersten Richtung steht, oder
wobei die erste Elektrodenanordnung (221) eine erste Elektrodenplatte und eine Mehrzahl von zweiten Elektrodenplatten umfasst, wobei die erste Elektrodenplatte eine Mehrzahl von Stapelabschnitten und eine Mehrzahl von Biegeabschnitten umfasst, wobei die Mehrzahl von Biegeabschnitten dazu ausgelegt sind, zwei benachbarte Stapelabschnitte zu verbinden, wobei die Mehrzahl von zweiten Elektrodenplatten und die Mehrzahl von Stapelabschnitten abwechselnd in der zweiten Richtung gestapelt sind, wobei die zweite Richtung senkrecht zur ersten Richtung steht und die erste Endfläche (2211) senkrecht zur ersten Richtung steht; und
wobei vorzugsweise die Batteriezelle ein Quader ist und die erste Richtung eine Längsrichtung der Batteriezelle ist.

7. Batteriezelle nach einem der Ansprüche 1 bis 6, wobei sich eine orthografische Projektion des Flüssigkeitseinspritzlochs (2131), die der Strömungsführung (23) zugewandt ist, auf der unteren Wand (2311) des Flüssigkeitsspeichertanks (231) befindet;
und/oder
wobei sich eine orthografische Projektion des fünften Durchgangslochs (232), die der ersten Oberfläche (243) zugewandt ist, innerhalb eines Bereichs des dritten Durchgangslochs (2431) befindet,
und/oder
wobei die untere Wand (2311) des Flüssigkeitsspeichertanks (231) in Bezug auf eine erste Ebene (2312) zum Lenken des Elektrolyten in das Innere des Flüssigkeitsspeichertanks (231) zum fünften Durchgangsloch (232) hin geneigt ist, wobei die erste Ebene (2312) senkrecht zu einer Achse des Flüssigkeitseinspritzlochs (2131) steht.

8. Batteriezelle nach Anspruch 7, wobei die untere Wand (2311) des Flüssigkeitsspeichertanks (231) in einem Winkel größer als 0° und kleiner als 1° in Bezug auf die erste Ebene (2312) geneigt ist.

9. Batteriezelle nach einem der Ansprüche 7 bis 8, wobei die Batteriezelle ferner Folgendes umfasst:
ein Isolierelement (25), wobei das Isolierelement (25) auf Außenflächen der ersten Elektrodenanordnung (221) und der zweiten Elektrodenanordnung (222) angeordnet ist, wobei das Isolierelement (25) dazu ausgelegt ist, die erste Elektrodenanordnung (221) von dem Gehäuse (21) zu isolieren und/oder die zweite Elektrodenanordnung (222) von dem Gehäuse (21) zu isolieren, und die Strömungsführung (23) an dem Isolierelement (25) fixiert ist.

10. Batteriezelle nach einem der Ansprüche 1 bis 9, wobei sich die orthografische Projektion des Flüssigkeitseinspritzlochs (2131), die der ersten Oberfläche (243) zugewandt ist, in einem Bereich des dritten Durchgangslochs (2431) befindet;
und/oder
wobei das Gehäuse (21) Folgendes umfasst:
eine Hülle (211), wobei die Hülle (211) eine hohle Struktur mit Öffnungen an zwei Enden ist, wobei die zwei Enden gegenüberliegende zwei Enden der Hülle (211) sind und die erste Wand (213) eine beliebige von Wänden der Hülle (211) ist; und
zwei Abdeckplatten (212), wobei die zwei Abdeckplatten (212) dazu ausgelegt sind, die Öffnungen an zwei Enden der Hülle (211) abzudecken.

11. Batteriezelle nach Anspruch 10, wobei die erste Elektrodenanordnung (221) isoliert von der zweiten Elektrodenanordnung (222) angeordnet ist, wobei ein positiver Elektrodenanschluss und ein negativer Elektrodenanschluss auf jeder der zwei Abdeckplatten (212) angeordnet sind und der positive Elektrodenanschluss und der negative Elektrodenanschluss auf jeder der zwei Abdeckplatten elektrisch mit einer daran angrenzenden Elektrodenanordnung zum Ableiten von elektrischer Energie von der Elektrodenanordnung verbunden sind.

12. Batteriezelle nach einem der Ansprüche 1 bis 11,
wobei die Batteriezelle Folgendes umfasst:
eine erste Elektrodenanordnungsgruppe und eine zweite Elektrodenanordnungsgruppe, die in der ersten Richtung angeordnet sind, wobei die erste Elektrodenanordnungsgruppe eine Mehrzahl der ersten Elektrodenanordnungen (221) umfasst, die in der zweiten Richtung angeordnet sind, wobei die zweite Elektrodenanordnungsgruppe eine Mehrzahl der zweiten Elektrodenanordnungen (222) umfasst, die in der zweiten Richtung angeordnet sind, und wobei eine identische Isolierstruktur (24) zwischen der ersten Elektrodenanordnungsgruppe und der zweiten Elektrodenanordnungsgruppe sandwichartig angeordnet ist.

13. Batterie, umfassend:
die Batteriezelle nach einem der Ansprüche 1 bis 12.

14. Elektrische Vorrichtung, umfassend:
die Batteriezelle nach einem der Ansprüche 1 bis 12, wobei die Batteriezelle dazu ausgelegt ist, die elektrische Vorrichtung mit elektrischer Energie zu versorgen.

## Revendications

1. Cellule de batterie, comprenant :
un boîtier (21) pourvu d'une cavité de réception, le boîtier (21) présentant une première paroi (213), et la première paroi (213) étant pourvue d'un trou d'injection de liquide (2131) ;
un premier ensemble d'électrodes (221) et un deuxième ensemble d'électrodes (222) agencés dans une première direction, le premier ensemble d'électrodes (221) et le deuxième ensemble d'électrodes (222) étant reçus dans la cavité de réception ;
une structure isolante (24), la structure isolante (24) étant disposée entre le premier ensemble d'électrodes (221) et le deuxième ensemble d'électrodes (222), la structure isolante (24) comprenant une deuxième paroi (241) et une troisième paroi (242), la deuxième paroi (241) étant opposée à une première face d'extrémité (2211) du premier ensemble d'électrodes (221), la troisième paroi (242) étant opposée à une deuxième face d'extrémité (2221) du deuxième ensemble d'électrodes (222), la deuxième paroi (241) étant pourvue d'un premier trou traversant (2411), la troisième paroi (242) étant pourvue d'un deuxième trou traversant (2421), une première surface (243) de la structure isolante (24) faisant face à la première paroi (213) étant pourvue d'un troisième trou traversant (2431), et le troisième trou traversant (2431) étant configuré pour introduire un électrolyte injecté à travers le trou d'injection de liquide (2131) à l'intérieur de la structure isolante (24) de sorte que l'électrolyte à l'intérieur de la structure isolante (24) s'écoule vers le premier ensemble d'électrodes (221) à travers le premier trou traversant (2411) et vers le deuxième ensemble d'électrodes (222) à travers le deuxième trou traversant (2421) ;
la première paroi (213) étant pourvue d'un mécanisme de décharge de pression (2133), le mécanisme de décharge de pression (2133) étant configuré pour se déclencher afin de décharger la pression au sein de la cellule de batterie lorsque la pression ou la température au sein de la cellule de batterie atteint une valeur seuil ; et
un guide d'écoulement (23) agencé entre les faces d'extrémité du premier ensemble d'électrodes (221) et du deuxième ensemble d'électrodes (222) faisant face à la première paroi (213) et la première paroi (213), le guide d'écoulement (23) étant pourvu d'un réservoir d'accumulation de liquide (231), une ouverture du réservoir d'accumulation de liquide (231) faisant face à la première paroi (213), une paroi de fond (2311) du réservoir d'accumulation de liquide (231) étant pourvue d'un cinquième trou traversant (232), le cinquième trou traversant (232) correspondant au troisième trou traversant (2431), le réservoir d'accumulation de liquide (231) étant configuré pour collecter l'électrolyte injecté à travers le trou d'injection de liquide (2131), et l'électrolyte dans le réservoir d'accumulation de liquide (231) traversant successivement le cinquième trou traversant (232) et le troisième trou traversant (2431) pour s'écouler à l'intérieur de la structure isolante (24).

2. Cellule de batterie selon la revendication 1, dans laquelle la structure isolante (24) comprend en outre une deuxième surface (244), la deuxième surface (244) est située à distance de la première paroi (213) et opposée à la première surface (243), la deuxième surface (244) est pourvue d'un quatrième trou traversant, et le quatrième trou traversant est configuré pour permettre à l'électrolyte à l'intérieur de la structure isolante (24) de s'écouler vers le premier ensemble d'électrodes (221) et le deuxième ensemble d'électrodes (222) à travers le quatrième trou traversant.

3. Cellule de batterie selon la revendication 1 ou 2, dans laquelle la deuxième paroi (241) est pourvue d'une pluralité de premiers trous traversants (2411), et/ou la troisième paroi (242) est pourvue d'une pluralité de deuxièmes trous traversants (2421).

4. Cellule de batterie selon la revendication 3, dans laquelle un nombre des premiers trous traversants (2411) ménagés dans la deuxième paroi (241) est égal à un nombre des deuxièmes trous traversants (2421) ménagés dans la troisième paroi (242), et des positions des premiers trous traversants (2411) ménagés dans la deuxième paroi (241) correspondent à des positions des deuxièmes trous traversants (2421) ménagés dans la troisième paroi (242).

5. Cellule de batterie selon la revendication 3 ou 4, dans laquelle la deuxième paroi (241) est pourvue d'une pluralité de rangées de premiers trous traversants (2411) agencées dans une deuxième direction, les premiers trous traversants (2411) dans chacune de la pluralité de rangées de premiers trous traversants (2411) comprennent une pluralité de premiers trous traversants (2411) agencés dans une troisième direction, la première direction, la deuxième direction et la troisième direction sont perpendiculaires deux à deux ; et/ou
la troisième paroi (242) est pourvue d'une pluralité de rangées de deuxièmes trous traversants (2421) agencées dans la deuxième direction, les deuxièmes trous traversants (2421) dans chacune de la pluralité de rangées de deuxièmes trous traversants (2421) comprennent une pluralité de deuxièmes trous traversants (2421) agencés dans la troisième direction, la première direction, la deuxième direction et la troisième direction sont perpendiculaires deux à deux.

6. Cellule de batterie selon l'une quelconque des revendications 1 à 5, dans laquelle le premier ensemble d'électrodes (221) comprend une première plaque d'électrode et une deuxième plaque d'électrode, la première plaque d'électrode et la deuxième plaque d'électrode sont placées enroulées autour d'un axe d'enroulement, l'axe d'enroulement est parallèle à la première direction, la première face d'extrémité (2211) est perpendiculaire à l'axe d'enroulement, ou
le premier ensemble d'électrodes (221) comprend une pluralité de premières plaques d'électrode et une pluralité de deuxièmes plaques d'électrode, la pluralité de premières plaques d'électrode et la pluralité de deuxièmes plaques d'électrode sont empilées de manière alternée dans la deuxième direction, la deuxième direction est perpendiculaire à la première direction, la première face d'extrémité (2211) est perpendiculaire à la première direction, ou
le premier ensemble d'électrodes (221) comprend une première plaque d'électrode et une pluralité de deuxièmes plaques d'électrode, la première plaque d'électrode comprend une pluralité de portions d'empilement et une pluralité de portions de pliage, la pluralité de portions de pliage sont configurées pour relier deux portions d'empilement adjacentes, la pluralité de deuxièmes plaques d'électrode et la pluralité de portions d'empilement sont empilées de manière alternée dans la deuxième direction, la deuxième direction est perpendiculaire à la première direction, et la première face d'extrémité (2211) est perpendiculaire à la première direction ; et
de préférence, la cellule de batterie étant un pavé droit, et la première direction étant une direction de longueur de la cellule de batterie.

7. Cellule de batterie selon l'une quelconque des revendications 1 à 6, dans laquelle une projection orthographique du trou d'injection de liquide (2131) faisant face au guide d'écoulement (23) est située sur la paroi de fond (2311) du réservoir d'accumulation de liquide (231) ;
et/ou
dans laquelle une projection orthographique du cinquième trou traversant (232) faisant face à la première surface (243) est située au sein d'une zone du troisième trou traversant (2431),
et/ou
dans laquelle la paroi de fond (2311) du réservoir d'accumulation de liquide (231) est inclinée par rapport à un premier plan (2312) pour faire converger l'électrolyte à l'intérieur du réservoir d'accumulation de liquide (231) vers le cinquième trou traversant (232), le premier plan (2312) est perpendiculaire à un axe du trou d'injection de liquide (2131).

8. Cellule de batterie selon la revendication 7, dans laquelle la paroi de fond (2311) du réservoir d'accumulation de liquide (231) est inclinée d'un angle supérieur à 0° et inférieur à 1° par rapport au premier plan (2312).

9. Cellule de batterie selon l'une quelconque des revendications 7 à 8, la cellule de batterie comprenant en outre :
un élément isolant (25), l'élément isolant (25) étant agencé sur des surfaces externes du premier ensemble d'électrodes (221) et du deuxième ensemble d'électrodes (222), l'élément isolant (25) étant configuré pour isoler le premier ensemble d'électrodes (221) du boîtier (21) et/ou pour isoler le deuxième ensemble d'électrodes (222) du boîtier (21), et le guide d'écoulement (23) étant fixé à l'élément isolant (25).

10. Cellule de batterie selon l'une quelconque des revendications 1 à 9, dans laquelle la projection orthographique du trou d'injection de liquide (2131) faisant face à la première surface (243) est située dans une zone du troisième trou traversant (2431) ;
et/ou
dans laquelle le boîtier (21) comprend :
une enveloppe (211), l'enveloppe (211) étant une structure creuse ouverte à deux extrémités, les deux extrémités étant deux extrémités opposées de l'enveloppe (211), et la première paroi (213) étant l'une quelconque des parois de l'enveloppe (211) ; et
deux plaques de couvercle (212), les deux plaques de couvercle (212) étant configurées pour recouvrir les ouvertures à deux extrémités de l'enveloppe (211).

11. Cellule de batterie selon la revendication 10, dans laquelle le premier ensemble d'électrodes (221) est disposé isolé du deuxième ensemble d'électrodes (222), une borne d'électrode positive et une borne d'électrode négative sont disposées sur chacune des deux plaques de couvercle (212), et la borne d'électrode positive et la borne d'électrode négative sur chacune des deux plaques de couvercle sont électriquement connectées à un ensemble d'électrodes adjacent à celles-ci afin de prélever de l'énergie électrique de l'ensemble d'électrodes.

12. Cellule de batterie selon l'une quelconque des revendications 1 à 11,
la cellule de batterie comprenant :
un premier groupe d'ensembles d'électrodes et un deuxième groupe d'ensembles d'électrodes agencés dans la première direction, le premier groupe d'ensembles d'électrodes comprenant une pluralité des premiers ensembles d'électrodes (221) agencés dans la deuxième direction, le deuxième groupe d'ensembles d'électrodes comprenant une pluralité des deuxièmes ensembles d'électrodes (222) agencés dans la deuxième direction, et une même structure isolante (24) étant intercalée entre le premier groupe d'ensembles d'électrodes et le deuxième groupe d'ensembles d'électrodes.

13. Batterie, comprenant :
la cellule de batterie selon l'une quelconque des revendications 1 à 12.

14. Dispositif électrique, comprenant :
la cellule de batterie selon l'une quelconque des revendications 1 à 12, la cellule de batterie étant configurée pour fournir de l'énergie électrique au dispositif électrique.
